# EUROPEAN PATENT APPLICATION

(11) **EP 1 816 537 A2**
(43) Date of publication of application: **08.08.2007**
(21) Application number: 07250315.4
(22) Date of filing: 26.01.2007
(51) Int. Cl.: G05F 1/70, H02M 1/42

(54) **Switching power supply circuit**

(30) Priority: 02.02.2006 JP 2006025644; 13.02.2006 JP 2006035569
(71) Applicant: Sony Corporation, Tokyo 141 (JP)
(72) Inventor: Yasumura, Masayuki, Shinagawa-ku Tokyo 141 (JP)
(74) Representative: Jackson, Jonathan Andrew

(57) **Abstract**

A switching power supply circuit includes a rectifying and smoothing part configured to convert input alternating-current, AC power from an AC power supply into direct-current, DC power; a converter part configured to convert the DC power from the rectifying and smoothing part into AC power, and further convert the AC power into DC power; and a power factor correction part configured to improve a power factor. The rectifying and smoothing part includes a primary-side rectifier element and a smoothing capacitor. The converter part includes a choke coil, a converter transformer, a switching element, a primary-side series resonant circuit, a primary-side parallel resonant circuit, an oscillation and drive circuit, and a control circuit. The power factor correction part includes an active clamp circuit, a power factor correction first diode, and a filter capacitor.

## Description

The present invention relates to a switching power supply circuit.

In recent years, switching power supply circuits have been employed as most of power supply circuits that rectify a commercial supply voltage to obtain a desired DC voltage. The switching power supply circuits are allowed to achieve miniaturization of transformers and other devices through enhancement of the switching frequency, and are used as a high-power DC-DC converter for a power supply in various electronic apparatuses.

The commercial supply voltage is a sinusoidal AC voltage. However, if the commercial supply voltage is rectified and smoothed in a smoothing and rectifying circuit employing a rectifier element and a smoothing capacitor, a current flows from the commercial voltage supply to the switching power supply circuit only during short periods around the peak voltages of the AC voltage due to the peak hold effect of the smoothing and rectifying circuit. Therefore, the current that flows from the commercial voltage supply to the power supply circuit has a distorted waveform significantly different from a sine wave. This results in a problem that the power factor, which indicates the use efficiency of the power supply, is deteriorated. Furthermore, there is a need to provide a countermeasure for suppressing harmonic waves of the cycle of the commercial supply voltage arising due to the distorted current waveform. In order to address these problems, a method employing a so-called active filter has been known as an existing technique for power factor correction (see e.g. Japanese Patent Laid-open No. Hei 6-327246).

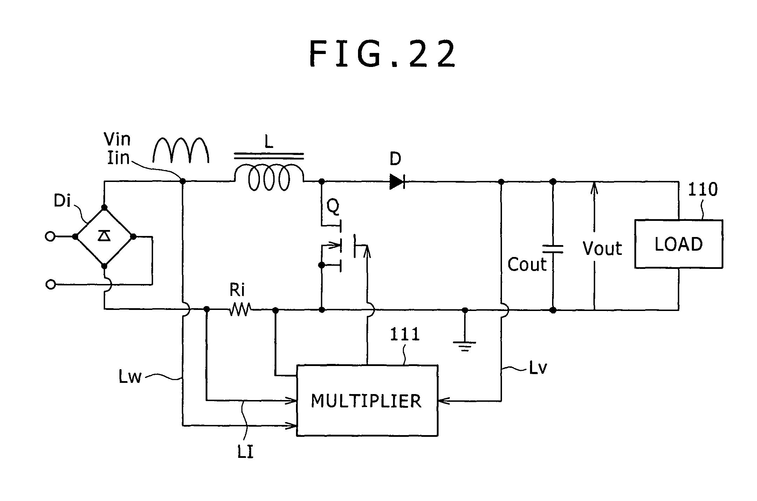

Fig. 22 shows the basic configuration of such an active filter. Referring to Fig. 22, a primary-side rectifier element Di configured as a bridge rectifier is connected to a commercial alternating-current power supply AC. A step-up converter is connected to the positive/negative lines of the primary-side rectifier element Di. A smoothing capacitor Cout is connected in parallel to the output of the converter, and a DC voltage Vout is obtained as the voltage across the smoothing capacitor Cout. This DC voltage Vout is supplied as an input voltage to a load 110 such as a subsequent-stage DC-DC converter.

As a configuration for power factor correction, the step-up converter and a controller for the converter are included. The step-up converter includes an inductor L, a fast-recovery high-speed switching diode D, and a switching element Q. The controller includes a multiplier 111 as its main component. The inductor L and the high-speed switching diode D are connected in series to each other between the positive output terminal of the primary-side rectifier element Di and the positive terminal of the smoothing capacitor Cout. A resistor Ri is provided between the negative output terminal of the primary-side rectifier element Di (primary-side ground) and the negative terminal of the smoothing capacitor Cout. The switching element Q is formed of e.g. a MOS-FET, and is provided between the primary-side ground and the connecting node between the inductor L and the high-speed switching diode D.

Connected to the multiplier 111 are a current sensing line LI, a waveform input line LW, and a voltage sensing line LV. The multiplier 111 senses from both the ends of the resistor Ri the signal dependent upon a rectified current Iin that flows through the negative output terminal of the primary-side rectifier element Di and is input from the current sensing line LI. Furthermore, the multiplier 111 senses the signal dependent upon a rectified voltage Vin from the positive output terminal of the primary-side rectifier element Di, input from the waveform input line LW. The rectified voltage Vin has the waveform composed of the absolute values of the waveform of an AC input voltage VAC from the commercial power supply AC. In addition, based on the DC voltage Vout across the smoothing capacitor Cout input from the voltage sensing line LV, the multiplier 111 senses the variation difference of the DC input voltage (signal arising from amplification of the difference between a predetermined reference voltage and the DC voltage Vout is referred to as a variation difference and this term will be used similarly also hereinafter). The multiplier 111 outputs a drive signal for driving the switching element Q.

The multiplier 111 (controller for the step-up converter) and the step-up converter multiply the signal dependent upon the rectified current Iin sensed through the current sensing line LI by the variation difference of the DC input voltage sensed through the voltage sensing line LV, and sense the error between the multiplication result and the signal dependent upon the rectified voltage Vin sensed through the waveform input line LW. Subsequently, the error signal is amplified and then pulse width modulation (PWM) conversion is implemented, to thereby control the switching element Q by a binary signal of the high and low levels. In this manner, a two-input feedback system is configured, so that the value of the DC voltage Vout is set to a predetermined value and the waveform of the rectified current Iin is made similar to that of the rectified voltage Vin. As a result, the waveform of the AC voltage applied from the commercial power supply AC to the primary-side rectifier element Di becomes similar to that of the AC current that flows to the primary-side rectifier element Di. Thus, such power factor correction is achieved that the power factor approaches almost one.

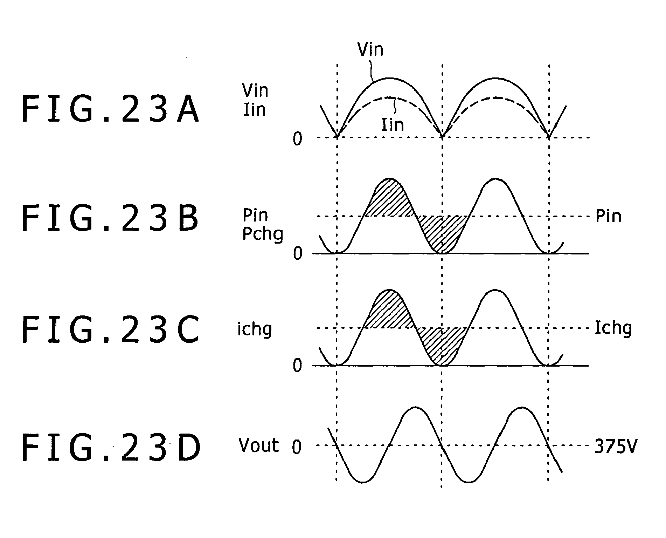

Fig. 23A shows the rectified voltage Vin and the rectified current Iin when the active filter circuit shown in Fig. 22 properly operates. Fig. 23B shows the change Pchg of energy (power) that is input and output to and from the smoothing capacitor Cout. The dashed line shows the average Pin of the input and output energy (power). Specifically, the smoothing capacitor Cout stores therein energy when the rectified voltage Vin is high and discharges energy when it is low, to thereby maintain the flow of the output power. Fig. 23C shows the waveform of a charging/discharging current Ichg to and from the smoothing capacitor Cout. Fig. 23D shows the DC voltage Vout, which is the voltage across the smoothing capacitor Cout. In the DC voltage Vout, a ripple voltage composed mainly of the second harmonic component of the cycle of the rectified voltage Vin is superimposed on a DC voltage (e.g., DC voltage of 375 V).

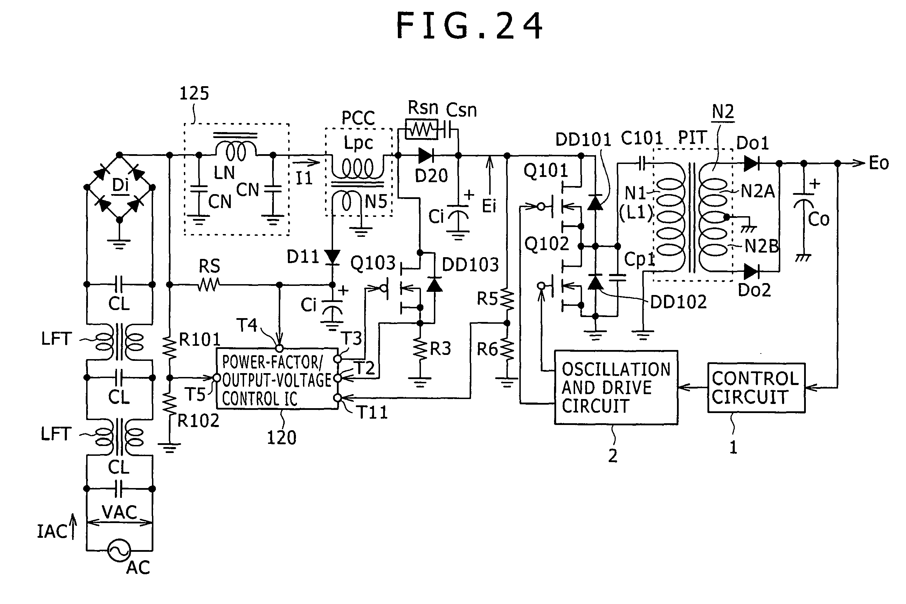

Fig. 24 illustrates a configuration example of a power supply circuit obtained by coupling an active filter based on the configuration in Fig. 22 to a current resonant converter as a subsequent-stage configuration. The power supply circuit in Fig. 24 employs a configuration that is compatible with the variation range of load power Po from 300 W to 0 W when the AC input voltage VAC is in the range of 85 V to 264 V. The current resonant converter employs a configuration based on a separately-excited half-bridge connection system.

The power supply circuit in Fig. 24 will be described below sequentially from the AC input side. A common mode noise filter formed of two line-filter transformers LFT and three across-line capacitors CL is provided, and a primary-side rectifier element Di is connected downstream of the common mode noise filter. To the rectified output line from the primary-side rectifier element Di, a pi-type normal mode noise filter 125 formed of an inductor LN and filter capacitors CN is connected.

The positive output terminal of the primary-side rectifier element Di is coupled to the positive terminal of a smoothing capacitor Ci via the series connection of the inductor LN, a choke coil PCC (serving as an inductor Lpc), and a fast-recovery high-speed switching diode D20. This smoothing capacitor Ci has a similar function to that of the smoothing capacitor Cout in Fig. 22. Furthermore, the inductor Lpc of the choke coil PCC and the high-speed switching diode D20 have similar functions to those of the inductor L and the high-speed switching diode D, respectively, shown in Fig. 22. In parallel to the high-speed switching diode D20 in this diagram, an RC snubber circuit formed of the series connection of a capacitor Csn and a resistor Rsn is connected.

A switching element Q 103 is equivalent to the switching element Q in Fig. 22. A power-factor/output-voltage control IC 120 is an integrated circuit (IC) for controlling the operation of the active filter that implements power factor correction so that the power factor is brought close to one. The control IC 120 includes a multiplier, divider, voltage error amplifier, PWM control circuit, and drive circuit that outputs a drive signal for driving the switching element Q103. Furthermore, a first feedback control circuit is formed. Specifically, in this circuit, the voltage arising from division of the voltage across the smoothing capacitor Ci (DC input voltage Ei) by voltage-dividing resistors R5 and R6 is input to a terminal T1 of the power-factor/output-voltage control IC 120 so that the DC input voltage Ei is set to a predetermined value.

Furthermore, a series circuit of voltage-dividing resistors R101 and R102 is provided between the positive output terminal of the primary-side rectifier element Di and the primary-side ground. The connecting node between the voltage-dividing resistors R101 and R102 is connected to a terminal T5. Thus, the rectified voltage from the primary-side rectifier element Di is input to the terminal T5 after being divided. In addition, the voltage across a resistor R3, i.e., the voltage dependent upon the source current of the switching element Q103, is input to a terminal T2. The source current of the switching element Q103 is a current that contributes to storage of magnetic energy, of a current I1 that flows through the choke coil PCC. In addition, a second feedback control circuit is formed that makes the signal dependent upon the rectified voltage input to the terminal T5 of the power-factor/output-voltage control IC 120 similar to the signal dependent upon the envelope of the voltage input to the terminal T2 (i.e., the envelope of the current I1).

A terminal T4 is supplied with an operating supply voltage for the power-factor/output-voltage control IC 120. Specifically, an alternating voltage is excited in a winding N5 that is transformer-coupled to the inductor Lpc in the chock coil PCC. The excited alternating voltage is converted into a low DC voltage by a half-wave rectifier circuit formed of a rectifier diode D11 and a series resonant capacitor C11, and this DC voltage is input to the terminal T4. The terminal T4 is also coupled to the positive output terminal of the primary-side rectifier element Di via a start-up resistor Rs. In a start-up period from powering-on of the commercial power supply AC to the excitation of a voltage in the winding N5, the rectified output obtained through the positive output terminal of the primary-side rectifier element Di is supplied via the start-up resistor Rs to the terminal T4. The power-factor/output-voltage control IC 120 uses the thus supplied rectified voltage as its start-up supply voltage to thereby start the operation.

From a terminal T3, a drive signal (gate voltage) for driving the switching element is output to the gate of the switching element Q103. Specifically, a drive signal for operating the following (above-described) two feedback control circuits is output to the gate of the switching element Q103: the first feedback control circuit that sets the value of the voltage arising from division by the voltage-dividing resistors R5 and R6 to a predetermined value, and the second feedback control circuit that makes the envelop of the current I1 similar to that of the DC input voltage Ei. Due to this operation, the waveform of the AC input current IAC that flows from the commercial power supply AC becomes almost the same as that of the AC input voltage VAC. Thus, such control that the power factor becomes almost one is obtained. That is, power factor correction is achieved.

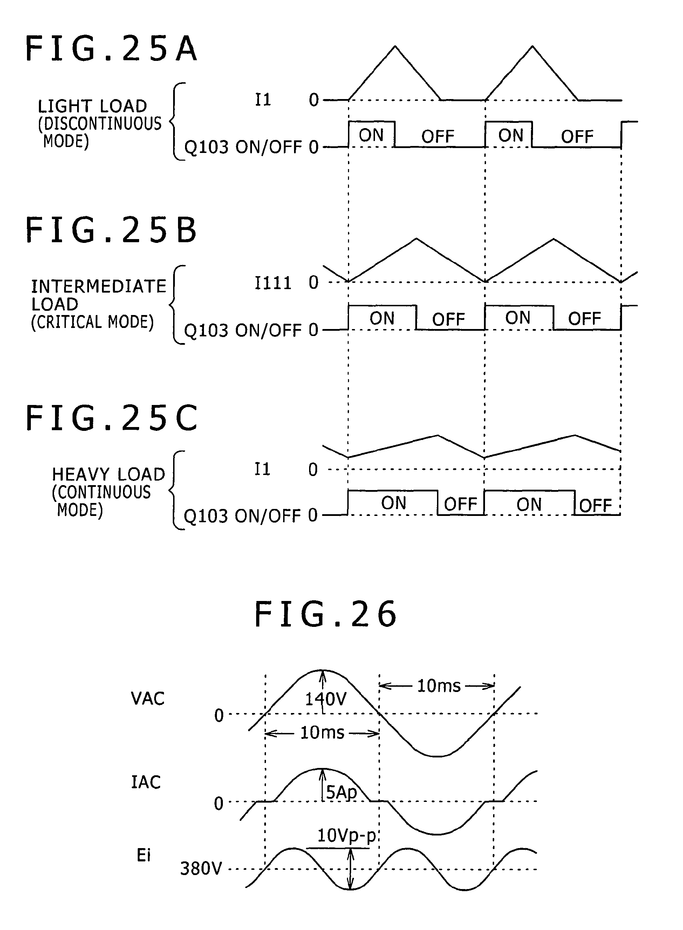

Figs. 25 and 26 show the waveforms of the respective components regarding the power factor correction operation of the active filter shown in Fig. 24. Fig. 25 shows the switching operation of the switching element Q103 (ON: conducting operation, OFF: disconnecting operation) and the current I1 that flows through the inductor Lpc of the choke coil PCC, dependent upon load variation. Fig. 25A shows the operation corresponding to a light load. Fig. 25B shows that corresponding to an intermediate load. Fig. 25C shows that corresponding to a heavy load. As is apparent from a comparison among Figs. 25A, 25B and 25C, as the load becomes heavier, the on-period of the switching element Q103 becomes longer, with the switching cycle thereof being kept constant. By thus adjusting the current I1 that flows via the inductor Lpc to the smoothing capacitor Ci depending upon the load condition, the DC input voltage Ei can be stabilized against voltage variation of the AC input voltage VAC and load variation. For example, the DC input voltage Ei is kept constant at 380 V for the range of the AC input voltage VAC from 85 V to 264 V. The DC input voltage Ei is the voltage across the smoothing capacitor Ci, and serves as a DC input voltage to the subsequent-stage current resonant converter.

Fig. 26 shows the waveforms of the AC input current IAC and the DC input voltage Ei based on a comparison with the AC input voltage VAC. These waveforms in Fig. 26 were obtained as an experimental result when the AC input voltage VAC was 100 V As shown in this diagram, the waveform of the AC input voltage VAC and that of the AC input current IAC are substantially similar to each other with respect to time passage. That is, power factor correction is achieved. In addition to the power factor correction, stabilization of the DC input voltage Ei at an average of 380 V is also indicated. As shown in the diagram, the DC input voltage Ei includes ripple variation of 10 Vp-p superimposed on the DC voltage of 380 V.

Referring back to Fig. 24, the current resonant converter subsequent to the active filter will be described below. The current resonant converter is supplied with the DC input voltage Ei and implements switching operation for power conversion. The current resonant converter includes a switching circuit formed of half-bridge connection of switching elements Q101 and Q102. This current resonant converter is separately excited, and a MOS-FET is used as the switching elements Q101 and Q102. Body diodes DD101 and DD102 are connected in parallel to these MOS-FETs. The switching elements Q101 and Q102 are switch-driven by an oscillation and drive circuit 2 at a requisite switching frequency so that they are alternately turned on and off. The oscillation and drive circuit 2 is controlled by a signal from a control circuit 1. The control circuit 1 operates to vary the switching frequency dependent upon the level of a secondary-side DC output voltage Eo, to thereby stabilize the output voltage Eo.

A converter transformer PIT is provided in order to transmit the switching output of the switching elements Q101 and Q102 from the primary side to the secondary side. One end of a primary winding N1 of the converter transformer PIT is coupled via a primary-side series resonant capacitor C101 to the connecting node (switching output node) between the switching elements Q101 and Q102, while the other end of the primary winding N1 is grounded. The primary-side series resonant capacitor C101 and a primary-side leakage inductance L1 form a series resonant circuit. The series resonant circuit is supplied with the switching output by the switching elements Q101 and Q 102, so that the resonant operation of the circuit arises.

A secondary winding N2 is wound on the secondary side of the converter transformer PIT. The secondary winding N2 includes a secondary winding portion N2A and a secondary winding portion N2B between which a center tap is provided as shown in the diagram. The center tap is connected to the secondary-side ground. The secondary winding portion N2A and the secondary winding portion N2B are connected to the anodes of a rectifier diode Do1 and a rectifier diode Do2, respectively, and the cathodes of the respective rectifier diodes Do1 and Do2 are connected to a smoothing capacitor Co. Thereby, a double-wave rectifier circuit is formed. Thus, the secondary-side DC output voltage Eo is obtained as the voltage across the smoothing capacitor Co. The secondary-side DC output voltage Eo is supplied to a load (not shown) and input to the above-described control circuit 1.

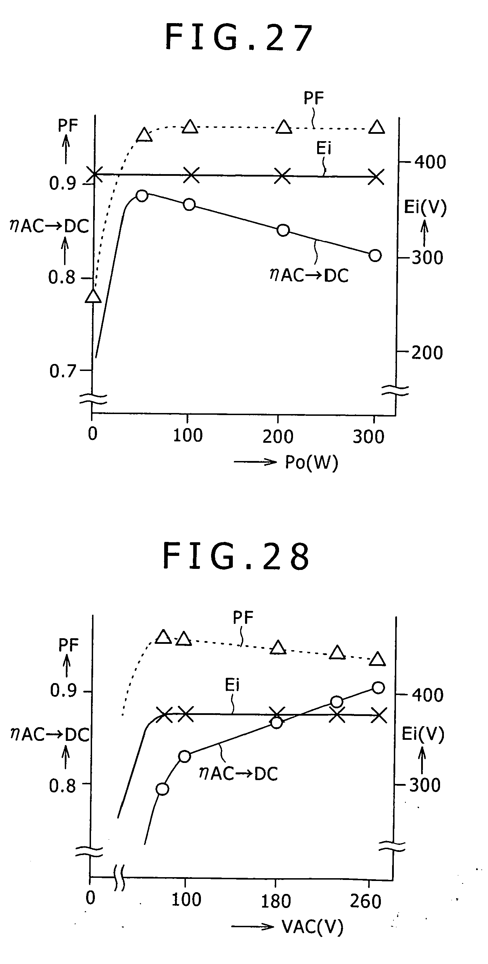

Fig. 27 shows the characteristics of the power conversion efficiency ηAC → DC from AC power to DC power (total efficiency), the power factor PF, and the DC input voltage Ei, as functions of load. This diagram shows characteristics associated with variation of the load power Po from 300 W to 0 W when the AC input voltage VAC is 100 V. Furthermore, Fig. 28 shows the characteristics of the power conversion efficiency ηAC → DC (total efficiency), the power factor PF, and the DC input voltage Ei, as functions of the AC input voltage VAC. This diagram shows characteristics associated with variation of the AC input voltage VAC from 85 V to 264 V under a constant load condition of the load power Po of 300 W.

Referring initially to Fig. 27, the power conversion efficiency (total efficiency) decreases as the load power Po becomes higher. In contrast, when the AC input voltage VAC is varied under the same load condition, the power conversion efficiency has a tendency of increasing as the level of the AC input voltage VAC becomes higher as shown in Fig. 28. For example, under the load condition of the load power Po of 300 W, the power conversion efficiency (total efficiency) was about 83.0%, 89.0%, and 80.0% when the AC input voltage VAC was 100 V, 230 V, and 85 V, respectively.

Turning back to Fig. 27, the power factor PF shows a characteristic of being almost constant against variation of the load power Po. Furthermore, as shown in Fig. 28, the power factor PF may be regarded as almost constant also against variation of the AC input voltage VAC although it has a tendency of slightly decreasing as the AC input voltage VAC becomes higher. For example, under the load condition of the load power Po of 300 W, the power factor PF was about 0.96 and 0.94 when the AC input voltage VAC was 100 V and 230 V, respectively.

As for the DC input voltage Ei, substantial constancy is exhibited both against variation of the load power Po and against variation of the AC input voltage VAC as shown in Figs. 27 and 28.

As is apparent from the above description, the power supply circuit in Fig. 24 is provided with a known active filter shown in Fig. 22, and power factor correction is intended through the employment of such a configuration.

However, the power supply circuit with the configuration of Fig. 24 involves the following problems. Specifically, the power conversion efficiency of the power supply circuit in Fig. 24 is obtained as a result of synthesis between the conversion efficiency from AC power to DC power corresponding to the former-stage active filter and the conversion efficiency from DC power to DC power in the latter-stage current resonant converter. That is, the total power conversion efficiency (total efficiency) of the circuit in Fig. 24 results from multiplication of these power conversion efficiency values. Because both these values are smaller than one, the total efficiency becomes smaller than each of the values as a result of the multiplication.

Furthermore, because the active filter circuit implements hard-switching operation, the degree of noise generation is high, which demands strict anti-noise measures. Therefore, in the circuit shown in Fig. 24, a noise filter formed of two line-filter transformers and three across-line capacitors is provided to the lines of the commercial power supply AC. In addition, the rectified output line is provided with a normal mode noise filter made up of one inductor LN and two filter capacitors CN. Moreover, an RC snubber circuit is provided to the fast-recovery high-speed switching diode D20 for rectification. In this manner, anti-noise measures formed of a large number of components need to be provided, which results in a cost increase and a larger mounting area of the power supply circuit board.

Furthermore, the switching frequency of the switching element Q103 operated by the power-factor/output-voltage control IC 120 as a general-purpose IC is fixed at 60 kHz, while the switching frequency of the subsequent-stage current resonant converter varies in the range of 80 kHz to 200 kHz. Because the switching timings (clocks) of both the switching elements are thus independent of each other, the ground potentials interfere with each other and hence become unstable due to the switching operation of both the elements on the basis of the respective clocks. Accordingly, e.g. abnormal oscillation is readily caused. This causes problems such as difficulty in circuit design and deterioration of the reliability.

Moreover, if the range of the AC input voltage is widened, the breakdown voltage of the switching elements need to be higher, which often makes the element choice difficult.

According to a first embodiment of the present invention, there is provided a switching power supply circuit that includes a rectifying and smoothing part configured to convert input AC power from an AC power supply into DC power, a converter part configured to convert the DC power from the rectifying and smoothing part into AC power, and further convert the AC power into DC power, and a power factor correction part configured to improve a power factor. The rectifying and smoothing part includes a primary-side rectifier element that is supplied with the input AC power from the AC power supply and rectifies the input power, and a smoothing capacitor. The converter part includes a choke coil of which one end is connected to one end of the smoothing capacitor, and a converter transformer in which a primary winding and a secondary winding are wound around a core so that the primary winding and the secondary winding are loosely coupled to each other. One end of the primary winding is connected to the other end of the choke coil. The converter part includes also a switching element of which one end is connected to the other end of the primary winding, and a primary-side series resonant circuit of which resonant frequency is dominated by a leakage inductance arising in the primary winding. The converter part further includes the inductance of the choke coil, and the capacitance of a primary-side series resonant capacitor of which one end is connected to the one end of the primary winding, and a primary-side parallel resonant circuit of which resonant frequency is dominated by the leakage inductance arising in the primary winding, the inductance of the choke coil, and the capacitance of a primary-side parallel resonant capacitor connected in parallel to the switching element. The converter part further includes an oscillation and drive circuit that turns on and off the switching element, and a control circuit that supplies such a control signal to the oscillation and drive circuit that a secondary-side DC output voltage is set to a predetermined value. The secondary-side DC output voltage is output from a secondary-side rectifier circuit connected to the secondary winding. The power factor correction part includes an active clamp circuit that is connected between the one end of the switching element and the one end of the choke coil, and includes a series circuit of a voltage clamp capacitor and an auxiliary switching element that is turned on in a complementary manner with the switching element. The power factor correction part includes also a power factor correction first diode of which one end is connected to one end of the output side of the primary-side rectifier element, and a filter capacitor that is connected between the one end of the power factor correction first diode and the one end of the smoothing capacitor.

According to a second embodiment of the invention, there is provided a switching power supply circuit that includes a rectifying and smoothing part configured to convert input AC power from an AC power supply into DC power, a converter part configured to convert the DC power from the rectifying and smoothing part into AC power, and further convert the AC power into DC power, and a power factor correction part configured to improve a power factor. The rectifying and smoothing part includes a primary-side rectifier element that is supplied with the input AC power from the AC power supply and rectifies the input power, and a smoothing capacitor. The converter part includes a choke coil of which one end is connected to one end of the smoothing capacitor, and a converter transformer in which a primary winding and a secondary winding are wound around the core so that the primary winding and the secondary winding are loosely coupled to each other. One end of the primary winding is connected to the other end of the choke coil. The converter part includes also a switching element of which one end is connected to the one end of the primary winding, and a primary-side series resonant circuit of which resonant frequency is dominated by a leakage inductance arising in the primary winding, the inductance of the choke coil, and the capacitance of a primary-side series resonant capacitor of which one end is connected to the other end of the primary winding. The converter part further includes a primary-side parallel resonant circuit of which resonant frequency is dominated by the leakage inductance arising in the primary winding, the inductance of the choke coil, and the capacitance of a primary-side parallel resonant capacitor connected in parallel to the switching element. The converter part further includes an oscillation and drive circuit that turns on and off the switching element, and a control circuit that supplies such a control signal to the oscillation and drive circuit that a secondary-side DC output voltage is set to a predetermined value. The secondary-side DC output voltage is output from a secondary-side rectifier circuit connected to the secondary winding. The power factor correction part includes an active clamp circuit that is connected in parallel to the choke coil, and includes a series circuit of a voltage clamp capacitor and an auxiliary switching element that is turned on in a complementary manner with the switching element. The power factor correction part includes also a power factor correction first diode of which one end is connected to one end of the output side of the primary-side rectifier element, and a filter capacitor that is connected between the one end of the power factor correction first diode and the one end of the smoothing capacitor.

The switching power supply circuits according to the first and second embodiments include the rectifying and smoothing part, the converter part, and the power factor correction part. The converter part may be configured as a multiple resonant converter that includes the primary-side series resonant circuit and the primary-side parallel resonant circuit. The resonant frequency of the primary-side series resonant circuit is dominated by the leakage inductance arising in the primary winding, the inductance of the choke coil, and the capacitance of the primary-side series resonant capacitor. The resonant frequency of the primary-side parallel resonant circuit is dominated by the leakage inductance arising in the primary winding, the inductance of the choke coil, and the capacitance of the primary-side parallel resonant capacitor. In the first embodiment, one end of the switching element is connected to the other end of the primary winding. In contrast, in the second embodiment, one end of the switching element is coupled to the connecting node between one end of the primary winding and the other end of the choke coil. The switching element is driven by the oscillation and drive circuit. The oscillation and drive circuit is supplied with such a control signal from the control circuit that the secondary-side DC output voltage output from the secondary-side rectifier circuit is set to a predetermined value.

The power factor correction part may include the active clamp circuit, the power factor correction first diode, and the filter capacitor. The active clamp circuit may include the series circuit of the voltage clamp capacitor and the auxiliary switching element that is turned on in a complementary manner with the switching element. One end of the power factor correction first diode is connected to one end of the output side of the primary-side rectifier element. The filter capacitor is connected between the one end of the power factor correction first diode and one end of the smoothing capacitor. The power factor correction part may serve as a boost converter that outputs the sum of the DC voltage obtained by the rectifying and smoothing part and the voltage across the voltage clamp capacitor, to improve the power factor. At least the leakage inductance arising in the primary winding may serve as a boost inductor of the boost converter, and the auxiliary switching element serves as a rectifier element. The expression "be turned on in a complementary manner" indicates that one of the switching element and the auxiliary switching element is in the on-state when the other is not in the on-state. In the first embodiment, the active clamp circuit is connected between one end of the switching element and one end of the choke coil. In the second embodiment, the active clamp circuit is connected in parallel to the choke coil. Furthermore, the active clamp circuit clamps the voltage arising across the switching element.

According to a third embodiment of the invention, there is provided a switching power supply circuit that includes a rectifying and smoothing part configured to convert input AC power from an AC power supply into DC power, a converter part configured to convert the DC power from the rectifying and smoothing part into AC power, and further convert the AC power into DC power, and a power factor correction part configured to improve a power factor. The rectifying and smoothing part includes a primary-side rectifier element that is supplied with the input AC power from the AC power supply and rectifies the input power, and a smoothing capacitor. The converter part includes a choke coil of which one end is connected to one end of the smoothing capacitor, and a converter transformer in which a primary winding and a secondary winding are wound around the core so that the primary winding and the secondary winding are loosely coupled to each other. One end of the primary winding is connected to the other end of the choke coil. The converter part includes also a switching element of which one end is connected to the other end of the primary winding, and a primary-side series resonant circuit of which resonant frequency is dominated by a leakage inductance arising in the primary winding, the inductance of the choke coil, and the capacitance of a primary-side series resonant capacitor of which one end is connected to the one end of the primary winding. The converter part further includes a primary-side parallel resonant circuit of which resonant frequency is dominated by the leakage inductance arising in the primary winding, the inductance of the choke coil, and the capacitance of a primary-side parallel resonant capacitor connected in parallel to the switching element. The converter part further includes an oscillation and drive circuit that turns on and off the switching element, and a control circuit that supplies such a control signal to the oscillation and drive circuit that a secondary-side DC output voltage is set to a predetermined value. The secondary-side DC output voltage is output from a secondary-side rectifier circuit connected to the secondary winding. The power factor correction part includes an active clamp circuit that is connected between the one end of the switching element and the one end of the choke coil, and includes a series circuit of a voltage clamp capacitor and an auxiliary switching element that is turned on in a complementary manner with the switching element, and a filter capacitor that is connected to the input side of the primary-side rectifier element. The primary-side rectifier element is formed of a rectifier element of which switching speed is sufficiently high for both the resonant frequency of the primary-side series resonant circuit and the resonant frequency of the primary-side parallel resonant circuit.

According to a fourth embodiment of the invention, there is provided a switching power supply circuit that includes a rectifying and smoothing part configured to convert input AC power from an AC power supply into DC power, a converter part configured to convert the DC power from the rectifying and smoothing part into AC power, and further convert the AC power into DC power, and a power factor correction part configured to improve a power factor. The rectifying and smoothing part includes a primary-side rectifier element that is supplied with the input AC power from the AC power supply and rectifies the input power, and a smoothing capacitor. The converter part includes a choke coil of which one end is connected to one end of the smoothing capacitor, and a converter transformer in which a primary winding and a secondary winding are wound around the core so that the primary winding and the secondary winding are loosely coupled to each other. One end of the primary winding is connected to the other end of the choke coil. The converter part includes also a switching element of which one end is connected to the one end of the primary winding, and a primary-side series resonant circuit of which resonant frequency is dominated by a leakage inductance arising in the primary winding, the inductance of the choke coil, and the capacitance of a primary-side series resonant capacitor of which one end is connected to the other end of the primary winding. The converter part further includes a primary-side parallel resonant circuit of which resonant frequency is dominated by the leakage inductance arising in the primary winding, the inductance of the choke coil, and the capacitance of a primary-side parallel resonant capacitor connected in parallel to the switching element. The converter part further includes an oscillation and drive circuit that turns on and off the switching element, and a control circuit that supplies such a control signal to the oscillation and drive circuit that a secondary-side DC output voltage is set to a predetermined value. The secondary-side DC output voltage is output from a secondary-side rectifier circuit connected to the secondary winding. The power factor correction part includes an active clamp circuit that is connected in parallel to the choke coil, and includes a series circuit of a voltage clamp capacitor and an auxiliary switching element that is turned on in a complementary manner with the switching element, and a filter capacitor that is connected to the input side of the primary-side rectifier element. The primary-side rectifier element is formed of a rectifier element of which switching speed is sufficiently high for both the resonant frequency of the primary-side series resonant circuit and the resonant frequency of the primary-side parallel resonant circuit.

The switching power supply circuits according to the third and fourth embodiments may include the rectifying and smoothing part, the converter part, and the power factor correction part. The converter part may be configured as a multiple resonant converter that includes the primary-side series resonant circuit and the primary-side parallel resonant circuit. The resonant frequency of the primary-side series resonant circuit may be dominated by the leakage inductance arising in the primary winding, the inductance of the choke coil, and the capacitance of the primary-side series resonant capacitor. The resonant frequency of the primary-side parallel resonant circuit is dominated by the leakage inductance arising in the primary winding, the inductance of the choke coil, and the capacitance of the primary-side parallel resonant capacitor. In the first embodiment, one end of the switching element may be connected to the other end of the primary winding. In contrast, in the second embodiment, one end of the switching element may be coupled to the connecting node between one end of the primary winding and the other end of the choke coil. The switching element is driven by the oscillation and drive circuit. The oscillation and drive circuit is supplied with such a control signal from the control circuit that the secondary-side DC output voltage output from the secondary-side rectifier circuit is set to a predetermined value.

The power factor correction part may include the active clamp circuit and the filter capacitor connected to the input side of the primary-side rectifier element. The active clamp circuit may include the series circuit of the voltage clamp capacitor and the auxiliary switching element that is turned on in a complementary manner with the switching element. The primary-side rectifier element is formed of rectifier elements of which switching speed is sufficiently high for both the resonant frequency of the primary-side series resonant circuit and the resonant frequency of the primary-side parallel resonant circuit. The power factor correction part serves as a boost converter that outputs the sum of the DC voltage obtained by the rectifying and smoothing part and the voltage across the voltage clamp capacitor, to improve the power factor. At least the leakage inductance arising in the primary winding serves as a boost inductor of the boost converter, and the auxiliary switching element serves as a rectifier element. The expression "be turned on in a complementary manner" indicates that one of the switching element and the auxiliary switching element is in the on-state when the other is not in the on-state. In the first embodiment, the active clamp circuit is connected between one end of the switching element and one end of the choke coil. In the second embodiment, the active clamp circuit is connected in parallel to the choke coil. Furthermore, the active clamp circuit clamps the voltage arising across the switching element.

According to the switching power supply circuits of embodiments of the present invention, a function of power factor correction can be offered without provision of an active filter. The absence of an active filter enhances the power conversion efficiency characteristic of the switching power supply circuit. Furthermore, a heat sink and so on can be omitted or miniaturized. In addition, the number of components is greatly reduced compared with a configuration including an active filter, which allows a cost reduction and decreases in the size and weight of the circuit. Moreover, in contrast to an active filter, which implements hard-switching operation, the switching converters of embodiments of the invention implement soft-switching operation because they are based on a resonant converter. This significantly reduces switching noise, which contributes to a cost reduction and decreases in the size and weight of the noise filter. In addition, because plural clocks of different frequencies are not employed, a problem of mutual interference among plural clock frequencies is not caused, which improves the reliability and facilitates pattern design for the circuit board. Moreover, the breakdown voltage of the switching element is allowed to be lower.

Preferably, the switching power supply circuit may be employed as a power supply for various electronic apparatuses.

Various respective aspects and features of the invention are defined in the appended claims. Features from the dependent claims may be combined with features of the independent claims as appropriate and not merely as explicitly set out in the claims.

The invention will now be described by way of example with reference to the accompanying drawings, throughout which like parts are referred to by like references, and in which:
Fig. 1 is a circuit diagram showing a configuration example of a switching power supply circuit according to an embodiment of the present invention;
Fig. 2 shows a structural example of a converter transformer of the embodiment;
Figs. 3A to 3G are waveform diagrams showing the operation of major parts in the power supply circuit of the embodiment, as waveforms based on a switching cycle;
Figs. 4A to 4G are waveform diagrams showing the operation of major parts in the power supply circuit of the embodiment, as waveforms based on an AC input voltage cycle;
Fig. 5 is a diagram showing the characteristics of the rectified and smoothed voltage, the power factor, the power conversion efficiency, and the ratio TON/TOFF, associated with AC input voltage variation, of the power supply circuit of the embodiment;
Fig. 6 is another circuit diagram showing a configuration example of a switching power supply circuit according to an embodiment of the invention;
Fig. 7 is further circuit diagram showing a configuration example of a switching power supply circuit according to an embodiment of the invention;
Figs. 8A to 8G are another waveform diagrams showing the operation of major parts in the power supply circuit of the embodiment, as waveforms based on a switching cycle;
Figs. 9A to 9G are another waveform diagrams showing the operation of major parts in the power supply circuit of the embodiment, as waveforms based on an AC input voltage cycle;
Fig. 10 is another diagram showing the characteristics of the rectified and smoothed voltage, the power factor, the power conversion efficiency, and the ratio TON/TOFF, associated with AC input voltage variation, of the power supply circuit of the embodiment;
Fig. 11 is a further circuit diagram showing a configuration example of a switching power supply circuit according to an embodiment of the invention;
Fig. 12 is a further circuit diagram showing a configuration example of a switching power supply circuit according to an embodiment of the invention;
Figs. 13A to 13G are further waveform diagrams showing the operation of major parts in the power supply circuit of the embodiment, as waveforms based on a switching cycle;
Figs. 14A to 14G are further waveform diagrams showing the operation of major parts in the power supply circuit of the embodiment, as waveforms based on an AC input voltage cycle;
Fig. 15 is a further diagram showing the characteristics of the rectified and smoothed voltage, the power factor, the power conversion efficiency, and the ratio TON/TOFF, associated with AC input voltage variation, of the power supply circuit of the embodiment;
Fig. 16 is a further circuit diagram showing a configuration example of a switching power supply circuit according to an embodiment of the invention;
Fig. 17 is a modification example of the secondary-side circuit of the embodiments;
Fig. 18 is another modification example of the secondary-side circuit of the embodiments;
Fig. 19 is further modification example of the secondary-side circuit of the embodiments;
Fig. 20 is a diagram showing the basic principle of the class-E switching converter of the embodiments;
Fig. 21 is a waveform diagram based on the basic principle of the class-E switching converter of the embodiments;
Fig. 22 is a diagram showing the configuration of an active filter as a background art;
Figs. 23A to 23D are waveform diagrams for explaining the operation of the active filter as a background art;
Fig. 24 is a circuit diagram showing a configuration example of a switching power supply circuit as a background art;
Figs. 25A to 25C are another waveform diagrams for explaining the operation of the active filter as a background art;
Fig. 26 is a waveform diagram showing the AC input voltage, the AC input current, and the smoothed voltage, as waveforms based on the cycle of a commercial AC supply voltage, in a power supply circuit including the active filter as a background art;
Fig. 27 is a characteristic diagram showing the characteristics of the power conversion efficiency, the power factor, and the rectified and smoothed voltage, associated with load variation, of the power supply circuit including the active filter as a background art; and
Fig. 28 is a characteristic diagram showing the characteristics of the power conversion efficiency, the power factor, and the rectified and smoothed voltage, associated with AC input voltage variation, of the power supply circuit including the active filter as a background art.

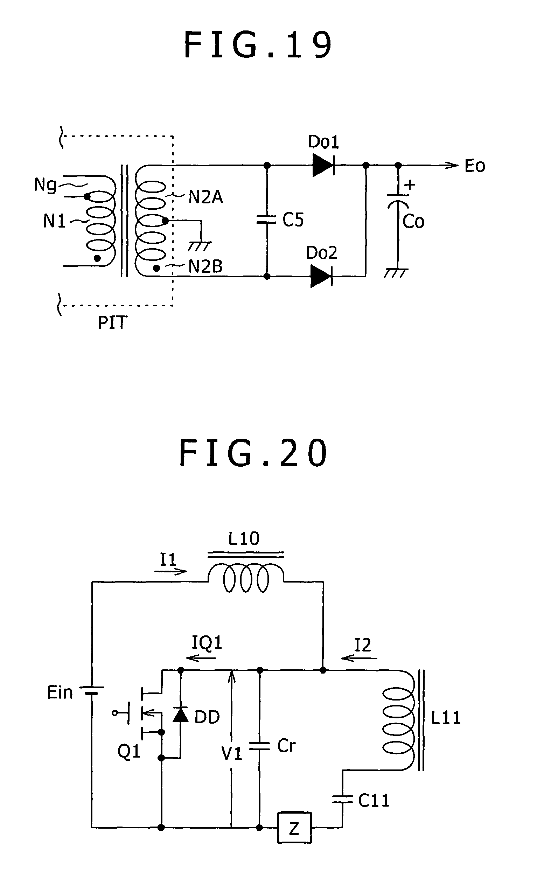

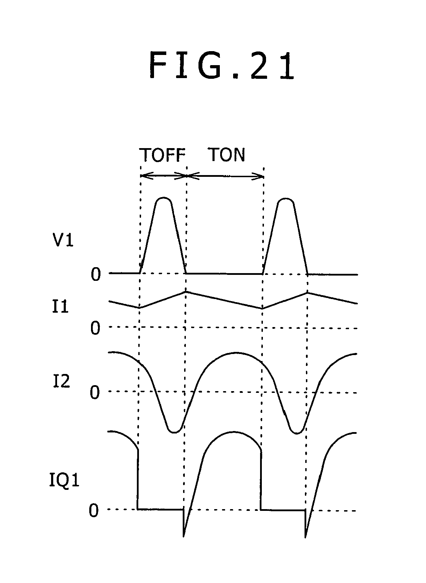

Before describing of best modes (embodiments, hereinafter) for carrying out the present invention, the basic configuration of a switching converter that implements class-E resonant switching operation (referred to also as a class-E switching converter, hereinafter) will be described below with reference to Figs. 20 and 21.

Fig. 20 shows the basic configuration of a class-E switching converter. The class-E switching converter in this diagram has a configuration as a DC-AC inverter that operates in a class-E resonant mode.

This class-E switching converter includes a switching element Q1. The switching element Q1 is e.g. a MOS-FET. A body diode DD is connected in parallel to the channel between the drain and source of the MOS-FET switching element Q1. In addition, a primary-side parallel resonant capacitor Cr is connected in parallel to the channel between the drain and source of the switching element Q 1.

The drain of the switching element Q1 is connected in series to a choke coil L10, and is coupled via the choke coil L10 to the positive electrode of a DC input power supply Ein. The source of the switching element Q1 is connected to the negative electrode of the DC input power supply Ein. The drain of the switching element Q1 is connected to one end of a choke coil L11. The other end of the choke coil L11 is connected in series to a series resonant capacitor C11. An impedance Z as a load is interposed between the series resonant capacitor C11 and the negative electrode of the DC input power supply Ein. The impedance Z arises from conversion of the secondary-side load into an equivalent primary-side load.

The class-E switching converter with this configuration can be regarded as one form of a complex resonant converter that includes a parallel resonant circuit formed of the inductance of the choke coil L10 and the capacitance of the primary-side parallel resonant capacitor Cr, and a series resonant circuit formed of the inductance of the choke coil L11 and the capacitance of the series resonant capacitor C11. In addition, the class-E switching converter can be regarded as a single-ended voltage resonant converter, in that it includes only one switching element.

Fig. 21 shows the operation of major parts in the class-E switching converter shown in Fig. 20.

A switching voltage V1 is the voltage obtained across the switching element Q1, and has the waveform shown in Fig. 21. Specifically, the voltage level is at the 0 level in the on-period TON during which the switching element Q1 is in the on-state, while a sinusoidal pulse is obtained in the off-period TOFF during which it is in the off-state. This switching pulse waveform is due to the resonant operation (voltage resonant operation) of the above-described parallel resonant circuit.

A switching current IQ1 is the current that flows through the switching element Q1 (and the body diode DD). During the off-period TOFF, the switching current IQ1 is at the 0 level. During the on-period TON, the switching current IQ1 has a certain waveform like the illustrated one. Specifically, during a certain period from the start of the on-period TON, the switching current IQ1 initially flows through the body diode DD, and thus has the negative polarity. Subsequently, the switching current IQ1 is inverted to the positive polarity, and thus flows from the drain to the source of the switching element Q1.

A current I2 that flows through the series resonant circuit as an output of the class-E switching converter arises from the synthesis between the switching current IQ1 that flows through the switching element Q1 (and the body diode DD) and the current that flows to the primary-side parallel resonant capacitor Cr, and has a waveform including sine wave components.

The waveforms of the switching current IQ1 and the switching voltage V1 indicate that ZVS operation is achieved at the turn-off timing of the switching element Q1, and ZVS and ZCS operations are achieved at the turn-on timing thereof.

A current I1 that flows from the positive electrode of the DC input power supply Ein through the choke coil L10 to the class-E switching converter has a ripple waveform with a certain average current level like the illustrated one, because the inductance of the choke coil L10 is set larger than that of the choke coil L11. This ripple current can be regarded as a DC current approximately.

### (First Embodiment)

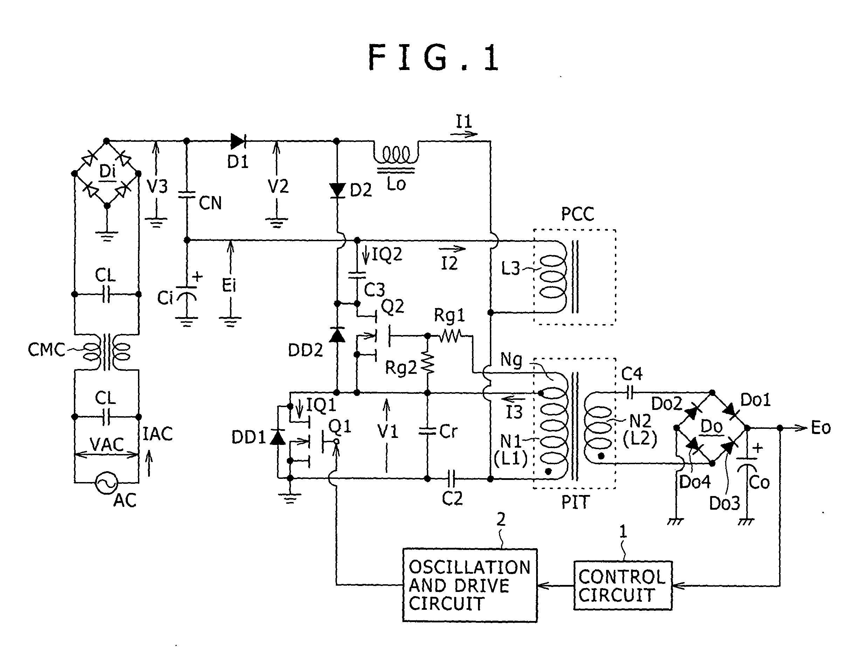

In a first embodiment of the present invention, the above-described class-E switching converter is modified so as to be applied to a power supply circuit. The outline of a switching power supply circuit of the first embodiment shown in the circuit diagram of Fig. 1 will be described below. Specifically, the switching power supply circuit of the first embodiment includes a rectifying and smoothing part that converts input AC power from an AC power supply into DC power, a converter part that converts the DC power into AC power and further converts the AC power into DC power, and a power factor correction part that improves the power factor. The outlines of the rectifying and smoothing part, converter part, power factor correction part, and secondary-side rectifier circuit will be described below sequentially.

The rectifying and smoothing part includes a primary-side rectifier element Di that is supplied with input AC power from an AC power supply and rectifies the input power and a smoothing capacitor Ci. Specifically, the rectifying and smoothing part includes a primary-side rectifying and smoothing circuit in which input AC power from the AC power supply is input to the input side of the primary-side rectifier element Di and one end of the output side of the primary-side rectifier element Di is coupled to the smoothing capacitor Ci so that DC power is produced.

The primary side has a configuration as voltage and current resonant converters that implement class-E switching operation. However, this converter has a connection structure different from that in the class-E switching converter in Fig. 20. Specifically, in the class-E switching converter in Fig. 20, DC power is supplied to the switching element Q1 from the connecting node between the choke coils L10 and L11. In contrast, in the converter of the first embodiment, DC power is supplied to a switching element Q1 from a series circuit of a choke coil PCC equivalent to the choke coil L10 and a leakage inductance L1 arising in a primary winding equivalent to the choke coil L11. Although having a configuration different from that of the class-E converter as described above, the converter of the first embodiment can achieve the effect of the class-E converter, i.e., the effect that the input current to the converter circuit is close to a DC current. The circuit configuration of the first embodiment will be referred to as a modified class-E converter. The primary side includes current and voltage resonant circuits as described above while the secondary side includes a current resonant circuit, so that a multiple resonant converter part is constructed.

More specifically, as a resonant converter, this multiple resonant converter part includes the choke coil PCC of which one end is connected to one end of the smoothing capacitor Ci, and a converter transformer PIT in which a primary winding N1 and a secondary winding N2 are wound around a core so that the windings N1 and N2 are loosely coupled to each other. One end of the primary winding N1 is connected to the other end of the choke coil PCC. Furthermore, the other end of the primary winding N1 of the converter transformer PIT (hereinafter, often abbreviated simply as the primary winding N1) is connected to one end of the switching element Q1, and thus AC power is supplied to the converter transformer PIT. In addition, the converter part includes a primary-side series resonant circuit and a primary-side parallel resonant circuit. The resonant frequency of the primary-side series resonant circuit is dominated by the leakage inductance L1 arising in the primary winding N1, an inductance L3 of the choke coil PCC, and the capacitance of a primary-side series resonant capacitor C2 of which one end is connected to the one end of the primary winding N1. The resonant frequency of the primary-side parallel resonant circuit is dominated by the leakage inductance L1 arising in the primary winding N1, the inductance L3 of the choke coil PCC, and the capacitance of a primary-side parallel resonant capacitor Cr that is connected in parallel to the switching element Q1. The other end of the output side of the primary-side rectifier element Di, the other end of the smoothing capacitor Ci, the other end of the switching element Q1, and the other end of the primary-side series resonant capacitor C2 are connected to each other and supplied with the primary-side ground potential.

The converter part includes also an oscillation and drive circuit 2 that turns on and off the switching element and a control circuit 1 that supplies such a control signal to the oscillation and drive circuit 2 that a secondary-side DC output voltage Eo is set to a predetermined value. The voltage Eo is output from the secondary-side rectifier circuit connected to the secondary winding N2 of the converter transformer PIT (hereinafter, often abbreviated simply as the secondary winding N2). The secondary-side rectifier circuit connected to the secondary winding N2 has a secondary-side series resonant capacitor C4 and thus forms a secondary-side series resonant circuit.

The control circuit 1 supplies the oscillation and drive circuit 2 with a detection output dependent upon the difference between the input secondary-side DC output voltage Eo and a reference voltage as the predetermined value. The oscillation and drive circuit 2 drives the switching element Q1 with mainly varying the switching frequency depending on the detection output input from the control circuit 1. In addition to the switching frequency, the time ratio, which is the ratio of the period during which the switching element Q1 is in the on-state in one cycle, may also be varied.

This variation control of the switching frequency of the switching element Q1 leads to changes of the resonant impedances of the primary and secondary sides of the power supply circuit. These impedance changes result in a change of the amount of power transmitted from the primary winding N1 to the secondary winding N2 in the converter transformer PIT, and in a change of the amount of power that should be supplied from the secondary-side rectifier circuit to a load. This offers operation of matching the magnitude of the secondary-side DC output voltage Eo with that of the reference voltage. That is, stabilization of the secondary-side DC output voltage Eo is allowed.

The switching power supply circuit of the first embodiment includes the power factor correction part. The power factor correction part includes an active clamp circuit, a power factor correction first diode D1, a power factor correction second diode D2, a power factor correction inductor Lo, and a filter capacitor CN. The active clamp circuit is connected between the one end of the switching element Q1 and the one end of the choke coil PCC. The active clamp circuit has a series circuit of an auxiliary switching element Q2 that is turned on in a complementary manner with the switching element Q1 and a voltage clamp capacitor C3.

One end of the power factor correction first diode D1 is connected to the one end of the output side of the primary-side rectifier element Di. The other end of the first diode D1 is connected to one end of the power factor correction second diode D2 and one end of the power factor correction inductor Lo. The polarity of the other end of the first diode D1 is made different from that of the one end of the second diode D2. Specifically, the second diode D2 is connected between the other end of the first diode D1 and the connecting node between the voltage clamp capacitor C3 and the auxiliary switching element Q2, and shunts a current from the first diode D1. The inductor Lo is connected between the other end of the first diode D1 and the other end of the choke coil PCC and the one end of the primary winding N1, and shunts a current from the first diode D1.

The filter capacitor CN is connected between the one end of the first diode D1 and the one end of the smoothing capacitor Ci. The other end of the inductor Lo is coupled to the connecting node between the other end of the choke coil PCC and the one end of the primary winding N1.

In the secondary-side rectifier circuit of the switching power supply circuit of the first embodiment, a secondary-side rectifier element Do and a smoothing capacitor Co are coupled to the secondary winding N2 to which the secondary-side series resonant capacitor C4 is connected in series. Thus, the secondary-side rectifier circuit is formed as a full-wave rectifier circuit. Specifically, positive and negative currents flow to the secondary-side series resonant capacitor C4 with the switching cycle, so that the capacitor C4 functions as a part of a resonant circuit without charges of either one of the polarities being charged therein. That is, the secondary-side rectifier circuit forms a secondary-side series resonant circuit of which series resonant frequency is dominated by a leakage inductance L2 of the secondary winding N2 and the capacitance of the secondary-side series resonant capacitor C4. The secondary-side rectifier circuit may not be a rectifier circuit that produces the voltage equivalent to that arising in the secondary winding N2, but be a voltage-doubler rectifier circuit that produces the doubled voltage. Furthermore, as the secondary-side resonant circuit, not only the series resonant circuit but also a partial voltage resonant circuit may be formed for construction of a multiple resonant converter.

A more detailed description will be made below on the switching power supply circuit of the first embodiment shown in Fig. 1 in the order from a commercial alternating-current power supply AC, with a main focus on the operation thereof. The two-phase input lines of the commercial power supply AC are coupled to the primary-side rectifier element Di via a common mode noise filter formed of a common mode choke coil CMC and two across-line capacitors CL. The common mode noise filter has a function to remove common mode noise that is generated between the lines of the commercial power supply AC and the secondary side of the switching power supply circuit.

AC power that has passed through the common mode noise filter is applied to the input side of the primary-side rectifier element Di that is formed by bridge-connecting four low-speed rectifier elements (diodes), so as to be rectified by the primary-side rectifier element Di. Thus, a ripple voltage is produced. The ripple voltage is supplied to the series circuit of the filter capacitor CN and the smoothing capacitor Ci. A switching voltage arising due to a high-frequency current that flows through the power factor correction first diode D1 is smoothed by the filter capacitor CN, which prevents noise leakage into the power supply AC. The smoothing capacitor Ci is coupled to the primary-side rectifier element Di via the series circuit of the first diode D1 and the power factor correction inductor Lo and the choke coil PCC. Thus, kept across the smoothing capacitor Ci is a DC input voltage Ei that is a DC voltage with a voltage value close to the peak value of the ripple voltage.

The DC input voltage Ei has the level equal to that of the AC input voltage VAC. This DC input voltage Ei serves as a DC input voltage for the class-E switching converter at the subsequent stage.

The multiple resonant converter part operates as a modified class-E switching converter, substantially similarly to the class-E switching converter. The converter part includes as its main components the choke coil PCC, the converter transformer PIT, the primary-side series resonant capacitor C2, the primary-side parallel resonant capacitor Cr, and the switching element Q1. The correspondence relationship between the respective components in the class-E switching converter of which principle has been described with Fig. 20 and the respective components in Fig. 1 is as follows. Specifically, the choke coil L10 corresponds to the choke coil PCC, the choke coil L11 to the leakage inductance L1 arising in the primary winding N1 of the converter transformer PIT, and the primary-side series resonant capacitor C11 to the primary-side series resonant capacitor C2. Furthermore, the primary-side parallel resonant capacitor Cr corresponds to the primary-side parallel resonant capacitor Cr, the switching element Q1 to the switching element Q 1, and the impedance Z as a load to the impedance arising from conversion of the secondary-side impedance into the equivalent primary-side impedance.

Specifically, in the first embodiment shown in Fig. 1, a modified class-E switching converter is configured as follows. One end of the choke coil PCC is connected to one end of the smoothing capacitor Ci. The other end of the choke coil PCC is connected to one end of the primary winding N1 of the converter transformer PIT and the primary-side series resonant capacitor C2. The other end of the primary winding N1 of the converter transformer PIT is connected to one end of the switching element Q1. Furthermore, the primary-side parallel resonant capacitor Cr is connected in parallel to the switching element Q1. Also when such a configuration is employed, a current I2 that flows from the smoothing capacitor Ci via the choke coil PCC to the switching converter is a ripple current, and therefore the smoothing capacitor Ci does not supply a high-frequency AC current based on the switching of the switching element Q1, which can offer an advantage that the burden on the smoothing capacitor Ci is decreased.

The primary winding N1 and the secondary winding N2 in the converter transformer PIT are loosely coupled to each other so that the coupling coefficient is at most 0.8, and hence the primary winding N1 has the leakage inductance L1. Thus, a primary-side series resonant circuit is formed of which primary-side series resonant frequency for a primary-side resonant current I1 is dominated by the leakage inductance L1, the inductance L3 of the choke coil PCC, and the capacitance of the primary-side series resonant capacitor C2. Furthermore, a primary-side parallel resonant circuit is formed of which primary-side parallel resonant frequency for the primary-side resonant current I1 is dominated by the leakage inductance L1, the inductance L3 of the choke coil PCC, and the capacitance of the primary-side parallel resonant capacitor Cr.

The expression "resonant frequency is dominated by" indicates that the resonant frequency depends mainly on these cited factors. The primary-side series resonant frequency and primary-side parallel resonant frequency are affected also by the inductance component of the power factor correction inductor Lo, the smoothing capacitor Ci, and so on. However, these factors have less effect on the resonant frequencies.

In addition, as described above, the secondary winding N2 of the converter transformer is connected to the secondary-side series resonant capacitor C4, which forms a secondary-side series resonant circuit of which resonant frequency is dominated by the leakage inductance component of the secondary side (expressed by an inductance L2 in Fig. 1) and the capacitance of the secondary-side series resonant capacitor C4. In the first embodiment, a full-wave rectifier circuit is employed as the circuit that forms the secondary-side series resonant circuit. Alternatively, this circuit may be configured as a voltage-doubler half-wave rectifier circuit or voltage-doubler full-wave rectifier circuit to be described later. Furthermore, the secondary side may employ not only the secondary-side series resonant circuit but also a partial resonant circuit. As the diodes used for the various rectifier circuits on the secondary side, high-speed diodes having a favorable high-frequency switching characteristic are employed to address a high-frequency current that flows through the secondary winding N2.

The switching element Q1 that supplies AC power to the primary-side series resonant circuit and primary-side parallel resonant circuit is connected to the other end of the primary winding N1. The oscillation and drive circuit 2 drives the switching element Q1. As described above, the primary side operates as a converter that implements modified class-E switching operation, and has a configuration as voltage and current resonant converters. Furthermore, the secondary side has a current resonant circuit. As a whole, a multiple resonant converter that keeps the value of the secondary-side DC output voltage Eo constant is configured. That is, from an AC standpoint, the switching power supply circuit of the first embodiment includes a multiple resonant converter part that has a primary-side series resonant circuit, primary-side parallel resonant circuit, and secondary-side series resonant circuit.

The operation of the power factor correction circuit will be described below. The series circuit of the power factor correction first diode D1 and the power factor correction inductor Lo is coupled to the connecting node between the other end of the choke coil PCC and the one end of the primary winding N1, which offers an advantage of power factor correction. By being coupled to the switching element Q1, the first diode D1 does not only allow passage of a current with the cycle of the AC input voltage VAC but also rectifies a current with the cycle corresponding to the resonant frequency arising due to the class-E switching converter so that a current flows in one direction. This operation extends the period during which the AC input current IAC flows, to thereby improve the power factor.

Specifically, by coupling the series circuit of the first diode D1 and the inductor Lo to the primary-side series resonant capacitor C2, a boost converter is configured in which the inductor Lo and the leakage inductance L1 of the converter transformer PIT serve as a boost inductor and the auxiliary switching element Q2 serves as a rectifier element. This allows a resonant current to flow through the first diode D1 and thereby can increase the conduction angle. The filter capacitor CN has a function to smooth a high-frequency current that flows due to the power factor correction operation to thereby suppress normal noise. The capacitance of the voltage clamp capacitor C3 is set to 0.068 µF (microfarad), the inductance of the power factor correction inductor Lo is set to 43 µH, and the capacitance of the filter capacitor CN is set to 1 µF.

Furthermore, coupled to the connecting node between the power factor correction first diode D1 and the power factor correction inductor Lo is one end of the power factor correction second diode D2, i.e., the end having the polarity opposite to that of the first diode D1. The other end of the second diode D2 is coupled to the connecting node between the auxiliary switching element Q2 and the voltage clamp capacitor C3. When the first diode D1 is in the off-state (non-conducting state), voltage resonance arises due to the parasitic capacitance of the first diode D1 and the inductance of the inductor Lo, which leads to appearance of a high peak voltage as a voltage V2. However, the above-described connection structure clamps the voltage V2 of the first diode D1, which allows the breakdown voltage of the first diode D1 to be lower. Furthermore, due to the first diode D1 and the inductor Lo, the period during which the switching element Q1 is in the off-state changes in association with variation of the load power Po. Specifically, the period during which the switching element Q1 is in the on-state is shortened in step with a decrease in the load power Po and an increase in the AC input voltage VAC. The increase in the switching frequency allows the secondary-side DC output voltage Eo to be kept constant.

The above-described operation of the power factor correction second diode D2 will be described in more detail below. When the power factor correction first diode D1 is in the off-state, voltage resonance arises due to the parasitic capacitance of the first diode D1 and the inductance of the power factor correction inductor Lo. Thus, a resonant voltage is generated as the voltage V2. However, if the power factor correction second diode D2 exists, when the auxiliary switching element Q2 is in the on-state and the current I1 is zero, the inductor Lo is short-circuited due to the second diode D2 and the auxiliary switching element Q2, which prevents the generation of such a resonant voltage. As a result, the magnitude of a reverse voltage applied to the first diode D1 can be decreased to approximately half that when the inductor Lo is not short-circuited due to the second diode D2 and the auxiliary switching element Q2. This can result in a decrease in the switching loss of the first diode D1, and thus can enhance the power conversion efficiency ηAC → DC.

The concrete specifications of the first diode D1 and the second diode D2 are 3 A/600 V and 1 A/ 600 V, respectively. The concrete specification of the switching element Q1 and the auxiliary switching element Q2 is 10 A/900 V. Note that the voltage values subsequent to the current values indicate breakdown voltages.

A more detailed description will be made below on the auxiliary switching element Q2. The auxiliary switching element Q2 is formed of a MOS-FET, and the gate thereof is driven by a control winding Ng wound around the converter transformer PIT. Proper design of the winding direction of the control winding Ng can cause the switching element Q1 and the auxiliary switching element Q2 to implement such complementary operation that they are not simultaneously turned on. In this manner, both the power factor correction circuit and the multiple resonant converter operate in a self-excited mode, and the frequencies thereof completely match each other.

The term "complementary operation" indicates that the switching element Q1 and the auxiliary switching element Q2 are not simultaneously turned on. Specifically, when the switching element Q1 is in the on-state, the auxiliary switching element Q2 never fails to be in the off-state. When the auxiliary switching element Q2 is in the on-state, the switching element Q1 never fails to be in the off-state. The resistance values of resistors Rg1 and Rg2 are 220 Ω (ohm) and 100 Ω, respectively. By properly defining the ratio of the resistance values of the resistors Rg1 and Rg2, the length of the period during which the auxiliary switching element Q2 is in the on-state can be controlled, and thus the efficiency of the switching power supply circuit and so on can be optimized.

This active clamp circuit including the voltage clamp capacitor C3 and the auxiliary switching element Q2 serves as a part of the power factor correction circuit. In addition, the active clamp circuit is provided in parallel to the series circuit of the choke coil PCC and the primary winding N1, and therefore can offer also an effect of clamping a voltage applied when the switching element Q1 is in the off-state to thereby allow the breakdown voltage of the switching element Q1 to be lower.

Because such a power factor correction circuit is added, a current I3 arising from superposition of the primary-side resonant current I1 on the current I2 that has a sawtooth waveform due to resonance, flows through the switching element Q1 and the auxiliary switching element Q2. Therefore, there is a tendency that the switching loss of the switching operation is increased and the power conversion efficiency ηAC → DC is lowered. From this standpoint, it is preferable that the first embodiment be applied to the case where the range of the AC input voltage VAC is large and the output is comparatively low, e.g., the case where the range of the AC input voltage VAC is from 100 V to 230 V and the output DC power is about 150 W.

A further description will be made below on the configuration of details of major parts in the switching power supply circuit of the first embodiment in Fig. 1.

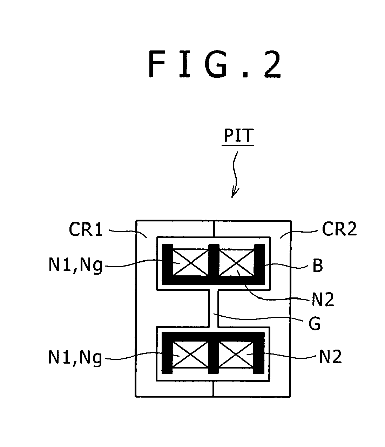

Initially, details of the converter transformer PIT will be described. The converter transformer PIT has a function to isolate the primary side from the secondary side and a function to convert a voltage. Furthermore, the converter transformer PIT functions also as the inductance L1, which serves as a part of the resonant circuit for allowing the multiple resonant modified class-E switching converter to function. The inductance 11 is a leakage inductance component formed by the converter transformer PIT. The specific configuration of the converter transformer PIT will be described below with reference to a sectional view of the converter transformer PIT in Fig. 2.

The converter transformer PIT includes an EE-core (EE-shaped core) formed by combining E-shaped cores CR1 and CR2 made of a ferrite material in such a manner that their magnetic legs face each other. Furthermore, a bobbin B formed of e.g. resin is provided so that winding parts on the primary side and secondary side are separated from each other so as to be independent of each other. Fitting the bobbin B around which the primary and secondary windings N1 and N2 have been wound to the EE-shaped core results in the state where the primary winding N1, the control winding Ng, and the secondary winding N2 are wound around the center leg of the EE-shaped core in such a manner that the windings N1 and Ng exist on the same winding region while the winding N2 separately exists on the different winding region. In this manner, the entire structure of the converter transformer PIT is completed.

In the center leg of the EE-shaped core, a gap G of 1.6 mm is formed. This gap G offers a value of 0.8 or less as a coupling coefficient k between the primary side and secondary side. In this manner, the leakage inductance L1 as a large inductance is obtained. The gap G can be formed by setting the center legs of the E-shaped cores CR1 and CR2 shorter than the respective two outer legs thereof. The number of turns of the primary winding N1, the secondary winding N2, and the control winding Ng are set to 45 T (turn), 30 T, and 1 T, respectively. As the core member, EER-35 (core member name) is employed. Under this condition, the value of the leakage inductance L1 arising in the primary winding N1 is 238 µH (microhenry), and the value of the leakage inductance L2 arising in the secondary winding N2 is 142 µH (microhenry). The capacitance values of the primary-side parallel resonant capacitor Cr, the primary-side series resonant capacitor C2, and the secondary-side series resonant capacitor C4 are 1000 pF, 0.056 µF, and 0.068 µF, respectively.

The choke coil PCC is formed by winding a choke coil winding around a core, and the value of the inductance L3 of the choke coil PCC is set to 0.5 mH. The choke coil PCC can employ a structure substantially similar to that of the converter transformer PIT. Furthermore, the power factor correction inductor Lo can also have a similar structure.

On the secondary side of the converter transformer PIT, a voltage of which waveform is similar to that of an alternating voltage induced by the primary winding N1 is generated in the secondary winding N2. Connected in series to the secondary winding N2 is the secondary-side series resonant capacitor C4. Thus, the leakage inductance L2 from the viewpoint of the secondary winding N2 and the secondary-side series resonant capacitor C4 form a secondary-side series resonant circuit. In the present embodiment, the resonant frequency of this secondary-side series resonant circuit is set almost equal to the primary-side series resonant frequency, which is dominated by the capacitance of the primary-side series resonant capacitor C2, the leakage inductance L1, and the inductance L3 of the choke coil PCC. However, the resonant frequency of the secondary-side series resonant circuit can be accordingly defined in terms of the relationship with the primary-side series resonant frequency. Furthermore, a partial voltage resonant circuit may be provided on the secondary side without provision of the secondary-side series resonant circuit.

As the switching element Q1, a MOS-FET is selected as described above. The switching element Q1 includes a body diode DD1 in parallel to the channel between the source and drain thereof.

The control circuit 1 supplies the oscillation and drive circuit 2 with a detection output dependent upon the difference between the input secondary-side DC output voltage Eo and a reference voltage as a predetermined value. The oscillation and drive circuit 2 drives the switching element Q1 with mainly varying the switching frequency depending on the detection output input from the control circuit 1. In addition to the switching frequency, the time ratio, which is the ratio of the period during which the switching element Q1 is in the on-state in one cycle, may also be varied.

This variation control of the switching frequency of the switching element Q1 leads to changes of the resonant impedances of the primary and secondary sides of the power supply circuit. These impedance changes result in a change of the amount of power transmitted from the primary winding N1 to the secondary winding N2 in the converter transformer PIT, and in a change of the amount of power that should be supplied from the secondary-side rectifier circuit to a load. This offers operation of matching the magnitude of the secondary-side DC output voltage Eo with that of the reference voltage. That is, stabilization of the secondary-side DC output voltage Eo is allowed. The value of the secondary-side DC output voltage Eo is set to 175 V.

### (Operation Waveforms of Major Parts and Measurement Data of First Embodiment)

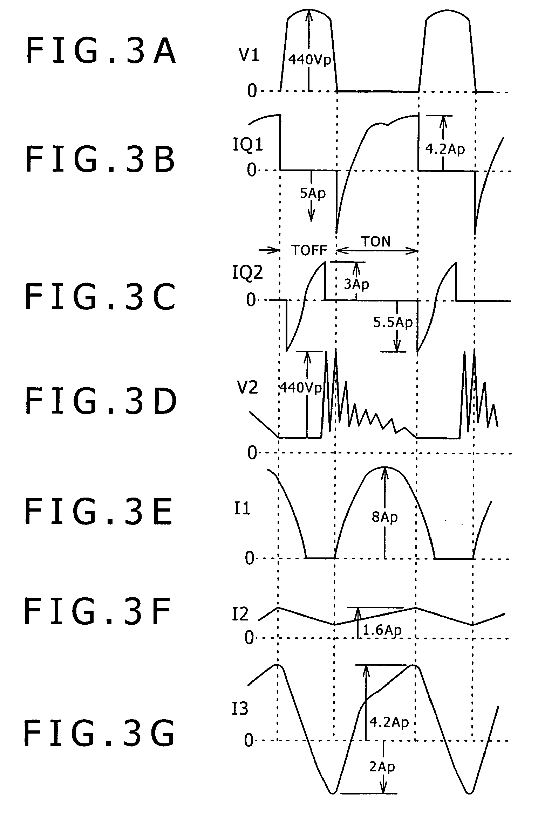

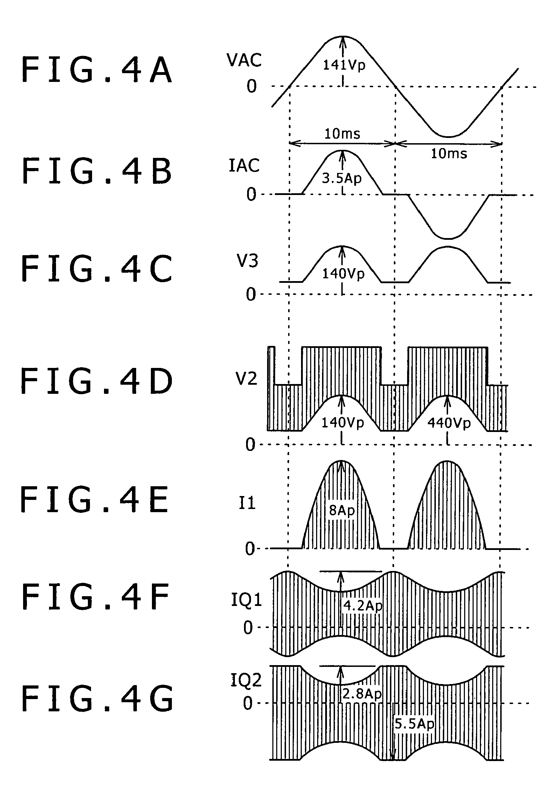

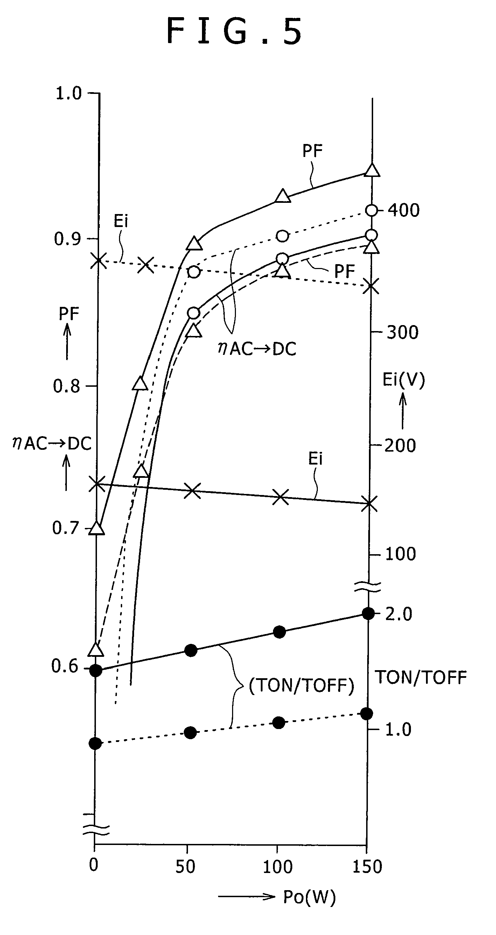

The configuration and operation of the switching power supply circuit of the first embodiment have been described above. Figs. 3 and 4 show the operation waveforms of major parts in the switching power supply circuit of the first embodiment in Fig. 1, and Fig. 5 shows the measurement data of the switching power supply circuit.

Figs. 3A to 3G show the operation waveforms of major parts in the converter part as waveforms based on the switching cycle, when the AC input voltage is 100 V and the load power is the maximum power of 150 W. Fig. 3A shows a primary-side resonant voltage V1 obtained across the switching element Q1. Fig. 3B shows a current IQ1 that flows through the switching element Q1 or the body diode DD1. Fig. 3C shows a current IQ2 that flows through the active clamp circuit. Fig. 3D shows the resonant voltage V2 that arises when the power factor correction first diode D1 is in the off-state. Fig. 3E shows the primary-side resonant current I1. Fig. 3F shows the ripple current I2 that flows via the choke coil PCC to the converter part. Fig. 3G shows the current I3 that flows through the switching element Q1 or the active clamp circuit and arises from superposition of the primary-side resonant current I1 on the ripple current I2.

Figs. 4A to 4G show the operation waveforms of major parts in the power factor correction circuit as waveforms based on the AC supply voltage cycle, when the AC input voltage is 100 V and the load power is the maximum power of 150 W. Fig. 4A shows the AC input voltage VAC. Fig. 4B shows the AC input current IAC. Fig. 4C shows a ripple voltage V3 arising from rectification by the primary-side rectifier element Di. Fig. 4D shows the resonant voltage V2 that arises when the power factor correction first diode D1 is in the off-state. Fig. 4E shows the primary-side resonant current I1. Fig. 4F shows the current IQ1 that flows through the switching element Q1 or the body diode DD1. Fig. 4G shows the current IQ2 that flows through the active clamp circuit. The respective hatched areas of the resonant voltage V2, the primary-side resonant current I1, the current IQ1, and the current IQ2 indicate that these voltages and currents are switched at the same cycle as that of the switching waveform of the switching element Q1. The inductance of the power factor correction inductor Lo is set so low that the discontinuous current mode arises as described above, to thereby match the envelope of the ripple voltage V3 with that of the current IAC so that a favorable power factor is achieved.

Fig. 5 shows the DC input voltage Ei, the power factor PF, the power conversion efficiency ηAC → DC from AC input power to DC output power, and the ratio TON/TOFF between the on-period TON and the off-period TOFF of the switching element Q1, as functions of the load power Po in the range of 0 W (no load) to 150 W, under the input voltage condition of the AC input voltage VAC of 100 V and 230 V, respectively. In Fig. 5, the full lines indicate the functions when the AC input voltage VAC is 100 V, while the dashed lines indicate the functions when it is 230 V.

Examples of the representative characteristics that can be read from Fig. 5 are as follows. Specifically, when the AC input voltage VAC is 100 V and the load power Po is 150 W, the power factor PF is as high as 0.95. When the AC input voltage VAC is 230 V and the load power Po is 150 W, the power factor PF is as high as 0.91.

Furthermore, due to the connection of the active clamp circuit to the modified class-E switching power supply circuit, even if the AC input voltage is widely changed, high values of the power conversion efficiency ηAC → DC are obtained. Specifically, when the AC input voltage VAC is 100 V and the load power Po is 150 W, the power conversion efficiency ηAC → DC is 90%. When the AC input voltage VAC is 230 V and the load power Po is 150 W, the power conversion efficiency ηAC → DC is 92.3%. This indicates that a wide range compatible configuration can be achieved in terms of the breakdown voltage of the switching element Q1.

Even when the load power Po is 25 W, the power factor PF is about 0.80 and 0.74 when the AC input voltage VAC is 100 V and 230 V, respectively.

As the load power Po decreases, the variation value ΔEi of the DC input voltage Ei decreases because the on-period and off-period of the switching element Q1 are shortened. When the AC input voltage VAC is 100 V, the variation range of the DC input voltage Ei from 150 V to 164 V is obtained in association with variation of the load power Po from 150 W to 0 W. Thus, the variation value ΔEi is 14 V. Furthermore, when the AC input voltage VAC is 230 V, the variation range of the DC input voltage Ei from 348 V to 363 V is obtained in association with variation of the load power Po from 150 W to 0 W. Thus, the variation value ΔEi is 15 V.

The switching power supply circuit of the first embodiment achieves enhanced power conversion efficiency ηAC → DC compared with the switching power supply circuit shown in Fig. 24 as a background art. Furthermore, because the switching power supply circuit of the first embodiment does not need to include an active filter, the circuit is allowed to include a reduced number of circuit components. Specifically, as is apparent from the description with reference to Fig. 24, the active filter is formed of a large number of components typified by the switching element Q103, the power-factor/output-voltage control IC 120 for driving the switching element Q103, and so on. In contrast, it is sufficient for the switching power supply circuit of the first embodiment to include the following elements as the additional components necessary for power factor correction: the filter capacitor CN, the power factor correction first diode D1, the power factor correction second diode D2, the power factor correction inductor Lo, and the active clamp circuit. Therefore, the number of components is greatly smaller compared with that of the circuit including the active filter. Thus, the circuit of the first embodiment can be achieved as a power supply circuit having a function of power factor correction at far lower costs compared with the circuit shown in Fig. 24. In addition, the great decrease in the number of components allows an effective reduction in the size and weight of the circuit board. Moreover, the inductance value of the power factor correction inductor Lo is as low as 43 µH, which leads to reduced size and weight.

In addition, in the switching power supply circuit of the first embodiment, the operation of the multiple resonant converter part and the power factor correction circuit part is so-called soft-switching operation. Therefore, the switching noise level is greatly lower compared with the circuit employing the active filter shown in Fig. 24. In particular, because the current input to the converter part can be brought close to a DC current, the switching noise level can be made significantly low.

Furthermore, the switching circuit of the first embodiment includes a primary-side series resonant circuit, primary-side parallel resonant circuit, and secondary-side series resonant circuit. Therefore, the secondary-side DC output voltage Eo can be maintained at a predetermined voltage through an extremely slight frequency change, and simplified design of a noise filter can be achieved. For that reason, even provision of a one-stage noise filter formed of one common mode choke coil CMC and two across-line capacitors CL can meet the electromagnetic interference regulations sufficiently. Furthermore, even provision of only one filter capacitor CN can sufficiently address normal mode noise across the rectified output line.

In addition, the secondary-side rectifier diodes Do1 to Do4, the power factor correction diode D1, and so forth operate in synchronization with the switching element Q1. This eliminates the problem in the power supply circuit in Fig. 24 that the ground potential on the active filter side interferes with that on the subsequent-stage switching converter side. Therefore, the ground potential can be stabilized irrespective of switching frequency changes.

### (Second Embodiment)

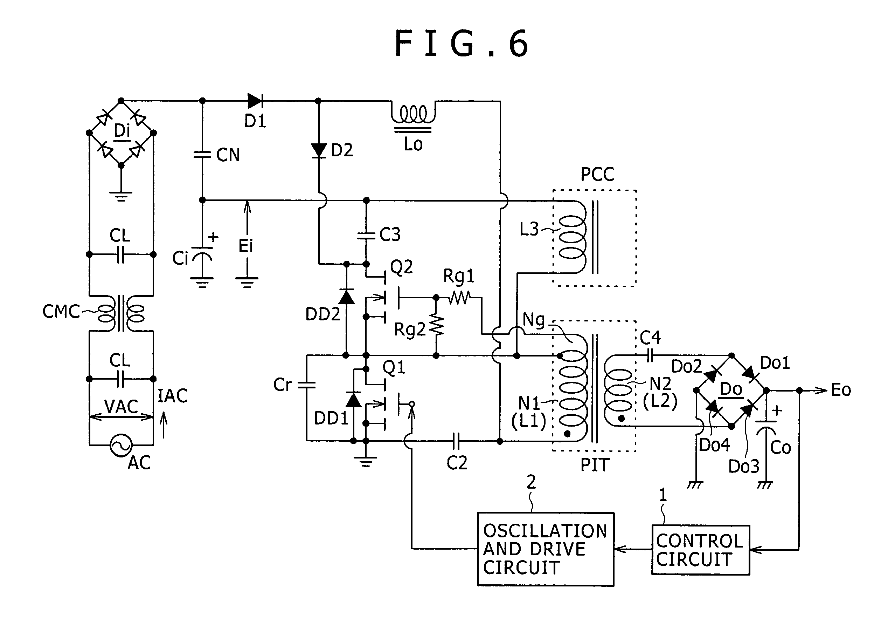

Fig. 6 shows a switching power supply circuit according to a second embodiment of the invention. Most part of the second embodiment employs the same configuration as that of the first embodiment. The same parts in the second embodiment as those in the first embodiment are given the same symbols in Fig. 6, and a description therefor is omitted. The difference between the first and second embodiments exists in the converter part. Specifically, in the first embodiment, the one end of the switching element Q1 is connected to the other end of the primary winding N1. In contrast, in the second embodiment, one end of a switching element Q1 is coupled to the connecting node between one end of a primary winding N1 and the other end of a choke coil PCC, so that a class-E switching converter is configured. The configurations of other parts are the same. The connection circuit in the second embodiment can also offer operation and effect substantially similar to those of the first embodiment.

As for the power factor correction part, in the first embodiment, the active clamp circuit is connected between the one end of the switching element Q1 and the one end of the choke coil PCC. In contrast, in the second embodiment, the active clamp circuit is connected in parallel to the choke coil PCC. In either case, the active clamp circuit clamps the voltage arising across the switching element Q1, and serves as a part of a boost converter to thereby contribute to power factor correction.

The specific configuration of the second embodiment is as follows. The converter part includes the choke coil PCC connected to a smoothing capacitor Ci, a converter transformer PIT in which the primary winding N1 and a secondary winding N2 are wound around the core so that the windings N1 and N2 are loosely coupled to each other. The other end of the choke coil PCC is connected to the one end of the primary winding N1 of the converter transformer PIT. The converter part includes also the switching element Q1 to which the one end of the primary winding N1 is connected, a primary-side series resonant circuit, and a primary-side parallel resonant circuit. The resonant frequency of the primary-side series resonant circuit is dominated by a leakage inductance L1 arising in the primary winding N1, an inductance L3 of the choke coil PCC, and the capacitance of a primary-side series resonant capacitor C2 connected to the other end of the primary winding N1. The resonant frequency of the primary-side parallel resonant circuit is dominated by the leakage inductance L1 arising in the primary winding N1, the inductance L3 of the choke coil PCC, and the capacitance of a primary-side parallel resonant capacitor Cr connected in parallel to the switching element Q1. The converter part further includes an oscillation and drive circuit 2 that turns on and off the switching element Q1, and a control circuit 1 that supplies such a control signal to the oscillation and drive circuit 2 that a secondary-side DC output voltage Eo is set to a predetermined value. The voltage Eo is output from a secondary-side rectifier circuit connected to the secondary winding N2.

The power factor correction part employs the same configuration as that of the first embodiment. Specifically, the power factor correction part includes the active clamp circuit that is connected in parallel to the choke coil PCC and has a series circuit of a voltage clamp capacitor C3 and an auxiliary switching element Q2 that is turned on in a complementary manner with the switching element Q1. The power factor correction part includes also a power factor correction first diode D1 of which one end is connected to one end of the output side of a primary-side rectifier element Di, and a power factor correction inductor Lo connected between the other end of the first diode D1 and the other end of the primary winding N1. The power factor correction part further includes a power factor correction second diode D2 connected between the other end of the first diode D1 and the connecting node between the voltage clamp capacitor C3 and the auxiliary switching element Q2, and a filter capacitor CN connected between the one end of the first diode D1 and one end of the smoothing capacitor Ci.

Operation and effect of major parts in the second embodiment are the same as those of major parts in the first embodiment, and hence a description therefore is omitted.

### (Third Embodiment)

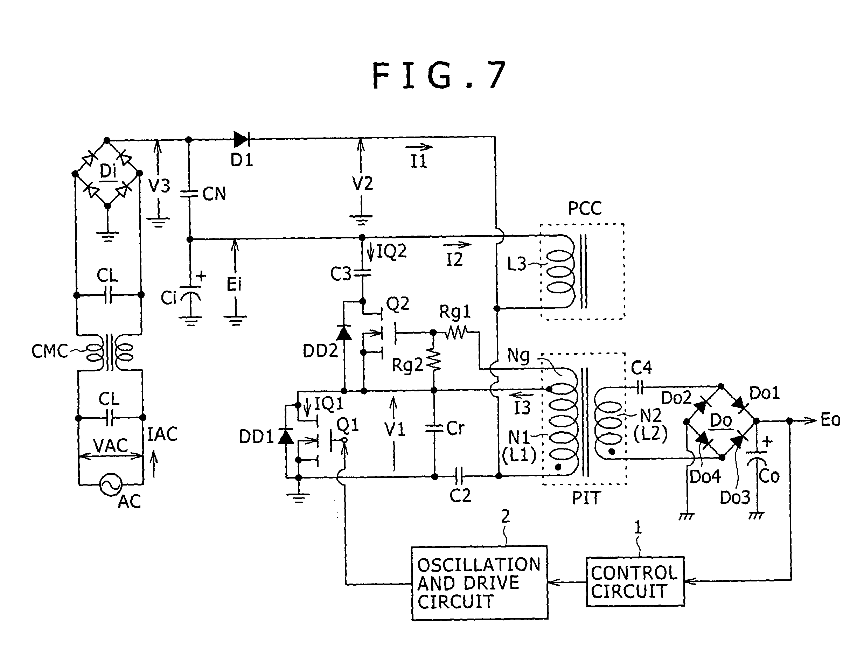

Fig. 7 shows a switching power supply circuit according to a third embodiment of the invention. Most part of the third embodiment employs the same configuration as that of the first embodiment. The same parts in the third embodiment as those in the first embodiment are given the same symbols in Fig. 7, and a description therefor is omitted. The third embodiment is different from the first embodiment, in that the third embodiment can achieve an effect of power factor correction without including a power factor correction inductor Lo and a power factor correction second diode D2.

Specifically, the configuration employed in the third embodiment is a switching power supply circuit including a rectifying and smoothing part that converts input AC power from an alternating-current power supply AC into DC power, a converter part that converts the DC power into AC power and further converts the AC power into DC power, and a power factor correction part that improves the power factor. The respective parts include the following configurations.

The rectifying and smoothing part includes a smoothing capacitor Ci and a primary-side rectifier element Di that is supplied with input AC power from an alternating-current power supply AC and rectifies the input power. The converter part includes a choke coil PCC of which one end is connected to one end of the smoothing capacitor Ci, and a converter transformer PIT in which a primary winding N1 and a secondary winding N2 are wound around the core so that the windings N1 and N2 are loosely coupled to each other. One end of the primary winding N1 is connected to the other end of the choke coil PCC. The converter part includes also a switching element Q1 of which drain as its one end is connected to the other end of the primary winding N1, a primary-side series resonant circuit, and a primary-side parallel resonant circuit. The resonant frequency of the primary-side series resonant circuit is dominated by a leakage inductance L1 arising in the primary winding N1, an inductance L3 of the choke coil PCC, and the capacitance of a primary-side series resonant capacitor C2 of which one end is connected to the one end of the primary winding N1. The resonant frequency of the primary-side parallel resonant circuit is dominated by the leakage inductance L1, the inductance L3, and the capacitance of a primary-side parallel resonant capacitor Cr connected in parallel to the switching element Q1. The converter part further includes an oscillation and drive circuit 2 that turns on and off the switching element Q1, and a control circuit 1 that supplies such a control signal to the oscillation and drive circuit 2 that a secondary-side DC output voltage Eo is set to a predetermined value. The voltage Eo is output from a secondary-side rectifier circuit that is coupled to the secondary winding N2, and formed of a secondary-side series resonant capacitor C4, a secondary-side rectifier element Do, and a smoothing capacitor Co.

The power factor correction part includes an active clamp circuit that is connected between the one end of the switching element Q1 and the one end of the choke coil PCC, and has a series circuit of a voltage clamp capacitor C3 and an auxiliary switching element Q2 that is turned on in a complementary manner with the switching element Q1. The power factor correction part includes also a power factor correction first diode D1 of which one end is connected to one end of the output side of the primary-side rectifier element Di, and a filter capacitor CN connected between the one end of the first diode D1 and the one end of the smoothing capacitor Ci.

The switching power supply circuit of the third embodiment does not include a power factor correction inductor Lo for the purpose of simplification of the circuit, because the leakage inductance L1 arising in the primary winding N1 serves as a boost inductor. In addition, a power factor correction second diode D2 is also omitted for further simplification of the circuit. Even with such a configuration, the power factor correction part shares the switching element Q1 and serves as a boost converter that outputs the sum of a DC input voltage Ei and the voltage arising across the voltage clamp capacitor C3, to thereby be capable of functioning to improve the power factor. Also in this configuration, the auxiliary switch operates as a rectifier element of the boost converter similarly to the first and second embodiments.

Furthermore, also in this configuration, the active clamp circuit has a function to clamp the voltage that arises when the switching element Q1 is in the off-state, and thus allows the breakdown voltage of the switching element Q1 to be lower.

The specific parameters of the respective components in the third embodiment are defined as follows. The secondary-side DC output voltage Eo is set to 175 V The period TOFF of the switching element Q1 changes in association with variation of load power Po. As the load power Po decreases and the AC input voltage VAC increases, the period TON is shortened and thus the switching frequency is increased, which allows the secondary-side DC output voltage Eo to be kept constant.

EER-35 is used as the ferrite core member of the converter transformer. The gap in the core has a gap length of 1.6 mm. The number of turns of the primary winding N1, the secondary winding N2, and a control winding Ng are 36 T, 30 T, and 1 T, respectively. The values of the leakage inductance L1 and a leakage inductance L2 are 165 µH and 142 µH, respectively. The capacitance values of the primary-side parallel resonant capacitor Cr, the primary-side series resonant capacitor C2, the voltage clamp capacitor C3, and a secondary-side series resonant capacitor C4 are 1000 pF, 0.047 µF, 0.068 µF, and 0.068 µF, respectively. The resistance values of resistors Rg1 and Rg2 are 220 Ω and 100 Ω, respectively. The capacitance value of the filter capacitor CN is 1 µF. The specification of the power factor correction first diode D1 is 3 A/600 V. The inductance L3 of the choke coil PCC is 0.5 mH. The specification of the switching element Q1 and the auxiliary switching element Q2 is 10 A/900 V.

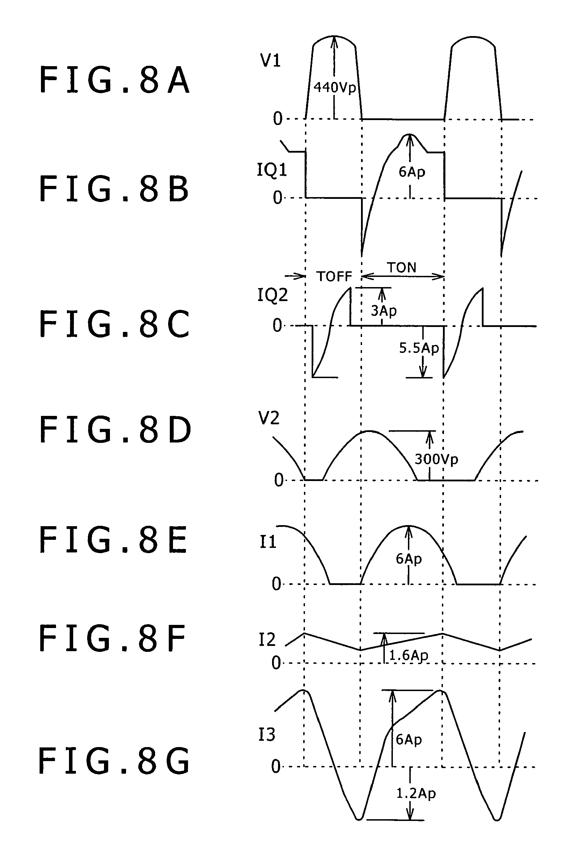

Figs. 8A to 8G show operation waveforms in the converter part as waveforms based on the switching cycle, when the AC input voltage is 100 V and the load power is the maximum power of 150 W. Fig. 8A shows a primary-side resonant voltage V1 obtained across the switching element Q1. Fig. 8B shows a current IQ1 that flows through the switching element Q1 or the body diode DD1. Fig. 8C shows a current IQ2 that flows through the active clamp circuit. Fig. 8D shows the resonant voltage V2 that arises when the power factor correction first diode D1 is in the off-state. Fig. 8E shows a primary-side resonant current I1. Fig. 8F shows a ripple current I2 that flows via the choke coil PCC to the converter part. Fig. 8G shows a current I3 that flows through the switching element Q1 or the active clamp circuit and arises from superposition of the primary-side resonant current I1 on the ripple current I2.

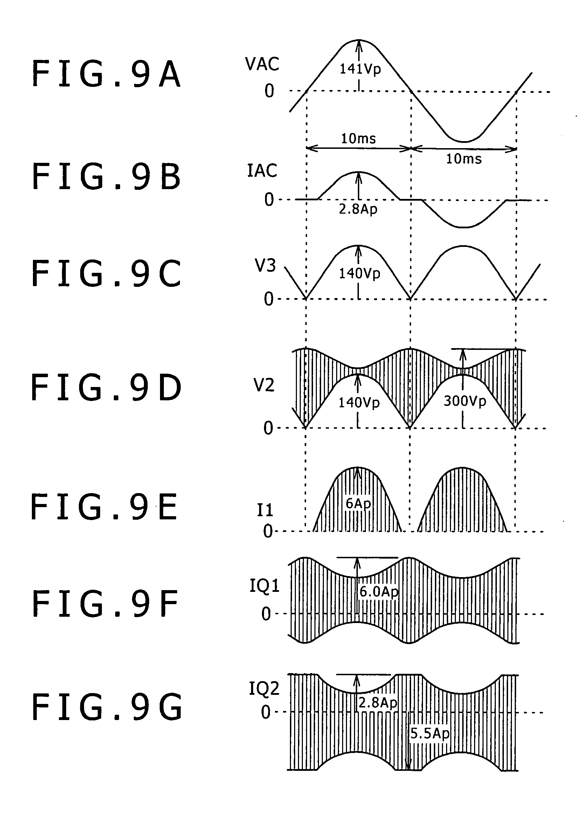

Figs. 9A to 9G show the operation waveforms of major parts in the power factor correction circuit as waveforms based on the AC supply voltage cycle, when the AC input voltage is 100 V and the load power is the maximum power of 150 W. Fig. 9A shows the AC input voltage VAC. Fig. 9B shows an AC input current IAC. Fig. 9C shows a ripple voltage V3 arising from rectification by the primary-side rectifier element Di. Fig. 9D shows the resonant voltage V2 that arises when the power factor correction first diode D1 is in the off-state. Fig. 9E shows the primary-side resonant current I1. Fig. 9F shows the current IQ1 that flows through the switching element Q1 or the body diode DD1. Fig. 9G shows the current IQ2 that flows through the active clamp circuit.

The respective hatched areas of the resonant voltage V2, the primary-side resonant current I1, the current IQ1, and the current IQ2 indicate that these voltages and currents are switched at the same cycle as that of the switching waveform of the switching element Q1.

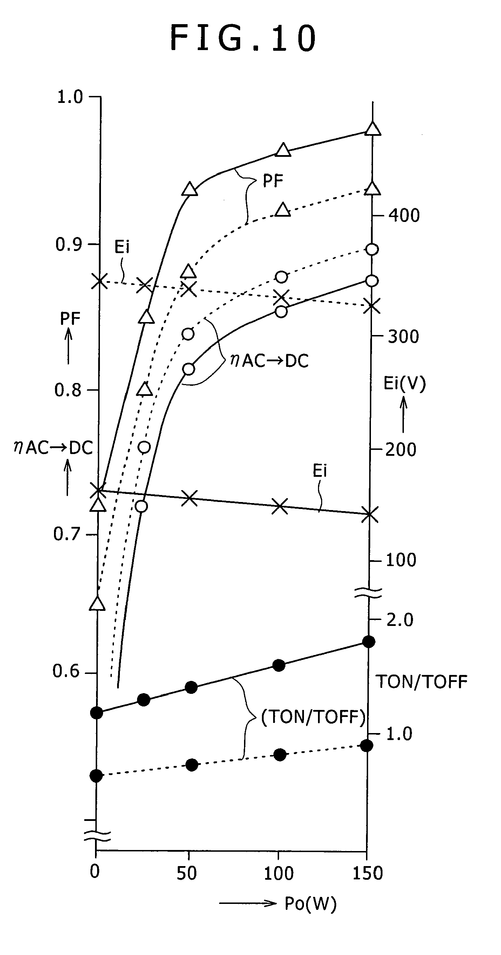

Fig. 10 shows the DC input voltage Ei, the power factor PF, the power conversion efficiency ηAC → DC from AC input power to DC output power, and the ratio TON/TOFF between the on-period TON and the off-period TOFF of the switching element Q1, as functions of the load power Po in the range of 0 W (no load) to 150 W, under the input voltage condition of the AC input voltage VAC of 100 V and 230 V, respectively. In Fig. 10, the full lines indicate the functions when the AC input voltage VAC is 100 V, while the dashed lines indicate the functions when it is 230 V.

Examples of the representative characteristics that can be read from Fig. 10 are as follows. Specifically, when the AC input voltage VAC is 100 V and the load power Po is 150 W, the power factor PF is as high as 0.98. When the AC input voltage VAC is 230 V and the load power Po is 150 W, the power factor PF is as high as 0.94.

Furthermore, even if the AC input voltage is widely changed, high values of the power conversion efficiency ηAC → DC are obtained. Specifically, when the AC input voltage VAC is 100 V and the load power Po is 150 W, the power conversion efficiency ηAC → DC is 88.2%. When the AC input voltage VAC is 230 V and the load power Po is 150 W, the power conversion efficiency ηAC → DC is 90.2%. This indicates that a wide range compatible configuration can be achieved in terms of the breakdown voltage of the switching element Q1.

Even when the load power Po is 25 W, the power factor PF is 0.80 when the AC input voltage VAC is 100 V.

As the load power Po decreases, the variation value ΔEi of the DC input voltage Ei decreases because the on-period and off-period of the switching element Q1 are shortened. When the AC input voltage VAC is 100 V, the variation range of the DC input voltage Ei from 137 V to 165 V is obtained in association with variation of the load power Po from 150 W to 0 W. Thus, the variation value ΔEi is 28 V. Furthermore, when the AC input voltage VAC is 230 V, the variation range of the DC input voltage Ei from 325 V to 355 V is obtained in association with variation of the load power Po from 150 W to 0 W. Thus, the variation value ΔEi is 30 V.

The switching power supply circuit of the third embodiment achieves enhanced power conversion efficiency ηAC → DC compared with the switching power supply circuit shown in Fig. 24 as a background art. Furthermore, because the switching power supply circuit of the third embodiment does not need to include an active filter, the circuit is allowed to include a reduced number of circuit components. Specifically, as is apparent from the description with reference to Fig. 24, the active filter is formed of a large number of components typified by the switching element Q103, the power-factor/output-voltage control IC 120 for driving the switching element Q103, and so on. In contrast, it is sufficient for the switching power supply circuit of the third embodiment to include the following elements as the additional components necessary for power factor correction: the filter capacitor CN, the power factor correction first diode D1, and the active clamp circuit. Therefore, the number of components is greatly smaller compared with that of the circuit including the active filter. Thus, the circuit of the third embodiment can be achieved as a power supply circuit having a function of power factor correction at far lower costs compared with the circuit shown in Fig. 24. In addition, the great decrease in the number of components allows an effective reduction in the size and weight of the circuit board.

### (Fourth Embodiment)

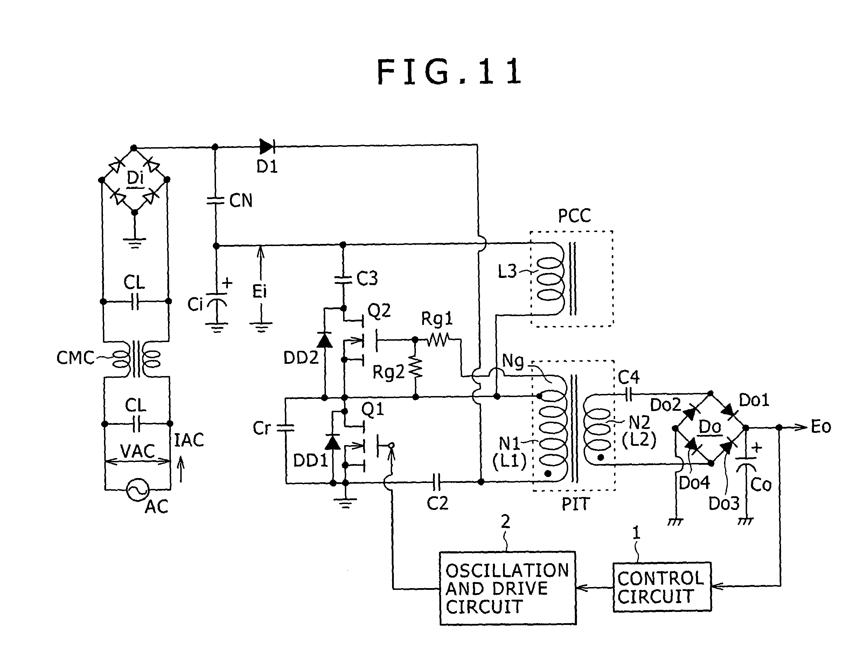

Fig. 11 shows a switching power supply circuit according to a fourth embodiment of the invention. Most part of the fourth embodiment employs the same configuration as that of the second embodiment. The same parts in the fourth embodiment as those in the second embodiment are given the same symbols in Fig. 11, and a description therefor is omitted. The fourth embodiment is different from the second embodiment, in that the fourth embodiment can achieve an effect of power factor correction without including a power factor correction inductor Lo and a power factor correction second diode D2.

Specifically, the configuration employed in the fourth embodiment is a switching power supply circuit including a rectifying and smoothing part that converts input AC power from an alternating-current power supply AC into DC power, a converter part that converts the DC power into AC power and further converts the AC power into DC power, and a power factor correction part that improves the power factor. The rectifying and smoothing part includes a smoothing capacitor Ci and a primary-side rectifier element Di that is supplied with input AC power from the alternating-current power supply AC and rectifies the input power.

The converter part includes a choke coil PCC of which one end is connected to one end of the smoothing capacitor Ci, a converter transformer PIT in which a primary winding N1 and a secondary winding N2 are wound around the core so that the windings N1 and N2 are loosely coupled to each other. One end of the primary winding N1 is connected to the other end of the choke coil PCC. The converter part includes also a switching element Q1 of which one end is connected to the one end of the primary winding N1, a primary-side series resonant circuit, and a primary-side parallel resonant circuit. The resonant frequency of the primary-side series resonant circuit is dominated by a leakage inductance L1 arising in the primary winding N1, an inductance L3 of the choke coil PCC, and the capacitance of a primary-side series resonant capacitor C2 of which one end is connected to the other end of the primary winding N1. The resonant frequency of the primary-side parallel resonant circuit is dominated by the leakage inductance L1, the inductance L3, and the capacitance of a primary-side parallel resonant capacitor Cr connected in parallel to the switching element Q1. The converter part further includes an oscillation and drive circuit 2 that turns on and off the switching element Q1, and a control circuit 1 that supplies such a control signal to the oscillation and drive circuit 2 that a secondary-side DC output voltage Eo is set to a predetermined value. The voltage Eo is output from a secondary-side rectifier circuit that is formed of a secondary-side series resonant capacitor C4 connected to the secondary winding N2, a secondary-side rectifier element Do, and a smoothing capacitor Co.

The power factor correction part employs the same configuration as that of the third embodiment. Specifically, the power factor correction part includes the active clamp circuit that is connected in parallel to the choke coil PCC and has a series circuit of a voltage clamp capacitor C3 and an auxiliary switching element Q2 that is turned on in a complementary manner with the switching element Q1. The power factor correction part includes also a power factor correction first diode D1 of which one end is connected to one end of the output side of the primary-side rectifier element Di, and a filter capacitor CN connected between the one end of the first diode D1 and the one end of the smoothing capacitor Ci.

The switching power supply circuit of the fourth embodiment does not include a power factor correction inductor Lo for the purpose of simplification of the circuit, because the leakage inductance L1 arising in the primary winding N1 serves as a boost inductor. In addition, a power factor correction second diode D2 is also omitted for further simplification of the circuit. Even with such a configuration, the power factor correction part shares the switching element Q1 and serves as a boost converter that outputs the sum of a DC input voltage Ei and the voltage arising across the voltage clamp capacitor C3, to thereby be capable of functioning to improve the power factor. Also in this configuration, the auxiliary switch operates as a rectifier element of the boost converter similarly to the first and second embodiments.

Furthermore, also in this configuration, the active clamp circuit has a function to clamp the voltage that arises when the switching element Q1 is in the off-state, and thus allows the breakdown voltage of the switching element Q1 to be lower.

Operation and effect of major parts in the fourth embodiment are the same as those of major parts in the first to third embodiments, and hence a description therefor is omitted.

### (Fifth Embodiment)

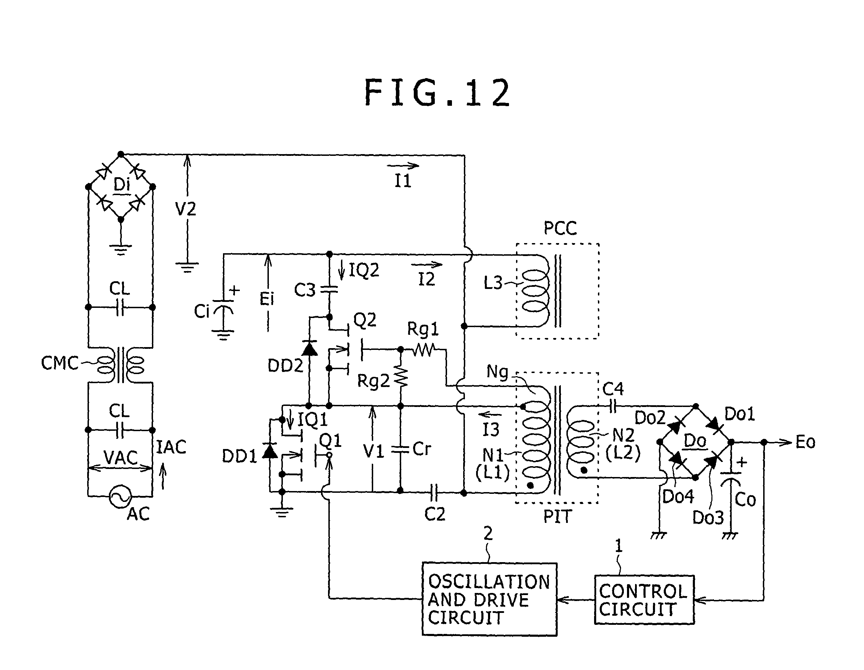

Fig. 12 shows a switching power supply circuit according to a fifth embodiment of the invention. Most part of the fifth embodiment employs the same configuration as that of the third embodiment. The same parts in the fifth embodiment as those in the third embodiment are given the same symbols in Fig. 12, and a description therefor is omitted. The fifth embodiment is different from the third embodiment, in that the fifth embodiment can achieve an effect of power factor correction without including a power factor correction first diode D1 and a filter capacitor CN connected between one end of the first diode D1 and one end of a smoothing capacitor Ci. Due to the absence of the first diode D1 and the filter capacitor CN, a high-frequency current flows through a primary-side rectifier element Di. To address this, the primary-side rectifier element Di is formed of high-speed diodes having favorable high-frequency characteristics. Furthermore, instead of the filter capacitor CN, across-line capacitors CL connected to the input side of the primary-side rectifier element exert a function similar to that of the filter capacitor CN.

Specifically, the configuration employed in the fifth embodiment is a switching power supply circuit including a rectifying and smoothing part that converts input AC power from an alternating-current power supply AC into DC power, a converter part that converts the DC power into AC power and further converts the AC power into DC power, and a power factor correction part that improves the power factor. The rectifying and smoothing part includes the smoothing capacitor Ci and the primary-side rectifier element Di that is supplied with input AC power from the AC power supply and rectifies the input power. The primary-side rectifier element Di is formed of high-speed diodes, and operates also as a part of the power factor correction part to be described later.

The converter part includes a choke coil PCC of which one end is connected to one end of the smoothing capacitor Ci, and a converter transformer PIT in which a primary winding N1 and a secondary winding N2 are wound around the core so that the windings N1 and N2 are loosely coupled to each other. One end of the primary winding N1 is connected to the other end of the choke coil PCC. The converter part includes also a switching element Q1 of which drain as its one end is connected to the other end of the primary winding N1, a primary-side series resonant circuit, and a primary-side parallel resonant circuit. The resonant frequency of the primary-side series resonant circuit is dominated by a leakage inductance L1 arising in the primary winding N1, an inductance L3 of the choke coil PCC, and the capacitance of a primary-side series resonant capacitor C2 of which one end is connected to the one end of the primary winding N1. The resonant frequency of the primary-side parallel resonant circuit is dominated by the leakage inductance L1, the inductance L3, and the capacitance of a primary-side parallel resonant capacitor Cr connected in parallel to the switching element Q1. The converter part further includes an oscillation and drive circuit 2 that turns on and off the switching element Q1, and a control circuit 1 that supplies such a control signal to the oscillation and drive circuit 2 that a secondary-side DC output voltage Eo is set to a predetermined value. The voltage Eo is output from a secondary-side rectifier circuit that is formed of a secondary-side series resonant capacitor C4 connected to the secondary winding N2, a secondary-side rectifier element Do, and a smoothing capacitor Co.

The power factor correction part includes an active clamp circuit and the across-line capacitors CL connected to the input side of the primary-side rectifier element Di. The active clamp circuit is connected between the drain of the switching element Q1 as its one end and the one end of the choke coil PCC, and has a series circuit of a voltage clamp capacitor C3 and an auxiliary switching element Q2 that is turned on in a complementary manner with the switching element Q1. The primary-side rectifier element Di is formed of high-speed diodes that are rectifier elements of which switching speed is sufficiently high for both the resonant frequency of the primary-side series resonant circuit and that of the primary-side parallel resonant circuit.

The switching power supply circuit of the fifth embodiment does not include a power factor correction inductor Lo for the purpose of simplification of the circuit, because the leakage inductance L1 arising in the primary winding N1 serves as a boost inductor. In addition, a power factor correction second diode D2 is also omitted for further simplification of the circuit. Even with such a configuration, the power factor correction part shares the switching element Q1 and serves as a boost converter that outputs the sum of a DC input voltage Ei and the voltage arising across the voltage clamp capacitor C3, to thereby be capable of functioning to improve the power factor. Also in this configuration, the auxiliary switch operates as a rectifier element of the boost converter similarly to the first and second embodiments.

Furthermore, also in this configuration, the active clamp circuit has a function to clamp the voltage that arises when the switching element Q1 is in the off-state, and thus allows the breakdown voltage of the switching element Q1 to be lower.

In the switching power supply circuit of the fifth embodiment, a power factor correction first diode D1, which is employed in e.g. the third embodiment, is also absent. However, because the primary-side rectifier element Di is formed of high-speed diodes that are rectifier elements of which switching speed is sufficiently high for both the resonant frequency of the primary-side series resonant circuit and that of the primary-side parallel resonant circuit, the primary-side rectifier element Di operates similarly to the first diode D1 to thereby improve the power factor. Furthermore, instead of the filter capacitor CN, the across-line capacitors CL connected to the input side of the primary-side rectifier element Di serve as a filter for the resonant frequencies of the primary-side series resonant circuit and primary-side parallel resonant circuit, to thereby prevent leakage of a high-frequency wave into the alternating-current power supply AC.

The specific parameters of the respective components in the fifth embodiment are defined as follows. The secondary-side DC output voltage Eo is set to 175 V The period TOFF of the switching element Q1 changes in association with variation of load power Po. As the load power Po decreases and the AC input voltage VAC increases, the period TON is shortened and thus the switching frequency is increased, which allows the secondary-side DC output voltage Eo to be kept constant.

EER-35 is used as the ferrite core member of the converter transformer. The gap in the core has a gap length of 1.6 mm. The number of turns of the primary winding N1, the secondary winding N2, and a control winding Ng are 36 T, 30 T, and 1 T, respectively. The values of the leakage inductance L1 and a leakage inductance L2 are 165 µH and 142 µH, respectively. The capacitance values of the primary-side parallel resonant capacitor Cr, the primary-side series resonant capacitor C2, the voltage clamp capacitor C3, and the secondary-side series resonant capacitor C4 are 1000 pF, 0.047 µF, 0.068 µF, and 0.068 µF, respectively. The resistance values of resistors Rg1 and Rg2 are 220 Ω and 100 Ω, respectively. The capacitance value of the across-line capacitors CL is 1 µF. The specification of the respective diodes of the primary-side rectifier element Di is 3 A/600 V. The inductance L3 of the choke coil PCC is 0.5 mH. The specification of the switching element Q1 and the auxiliary switching element Q2 is 10 A/900 V.

If the respective diodes of the primary-side rectifier element Di are low-frequency-use diodes employed for normal commercial power, e.g., diodes intended to address a frequency of about 100 Hz, it is difficult for the primary-side rectifier element Di to rectify a resonant current that flows on the primary side, and the breakdown of the primary-side rectifier element Di is possibly caused due to the switching loss. Therefore, e.g. diodes are used that have favorable high-frequency characteristics and thus can implement switching favorably with small loss for a frequency on the order of several hundred kilohertz.

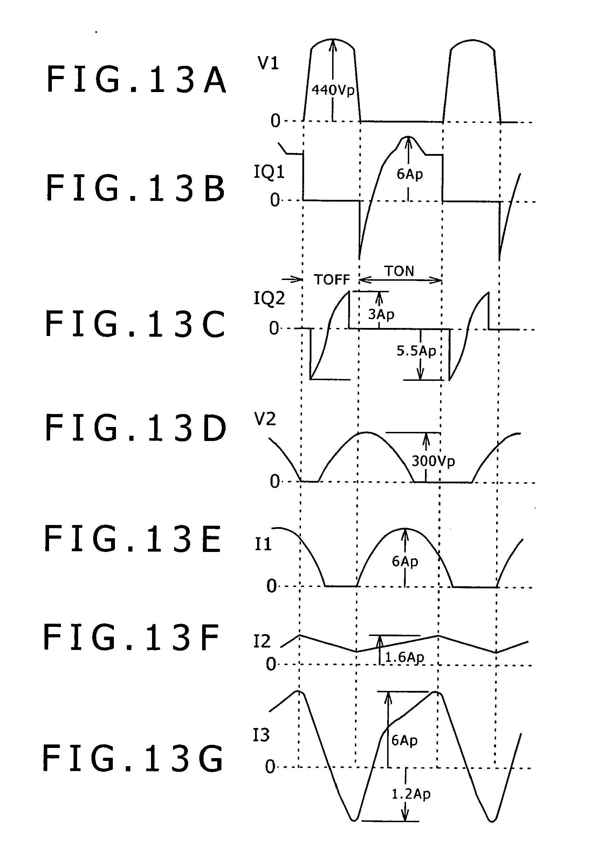

Figs. 13A to 13G show operation waveforms in the converter part as waveforms based on the switching cycle, when the AC input voltage is 100 V and the load power is the maximum power of 150 W. Fig. 13A shows a primary-side resonant voltage V1 obtained across the switching element Q1. Fig. 13B shows a current IQ1 that flows through the switching element Q1 or the body diode DD1. Fig. 13C shows a current IQ2 that flows through the active clamp circuit. Fig. 13D shows a primary-side resonant voltage V2. Fig. 13E shows a primary-side resonant current I1. Fig. 13F shows a ripple current I2 that flows via the choke coil PCC to the converter part. Fig. 13G shows a current 13 that flows through the switching element Q1 or the active clamp circuit and arises from superposition of the primary-side resonant current I1 on the ripple current I2.

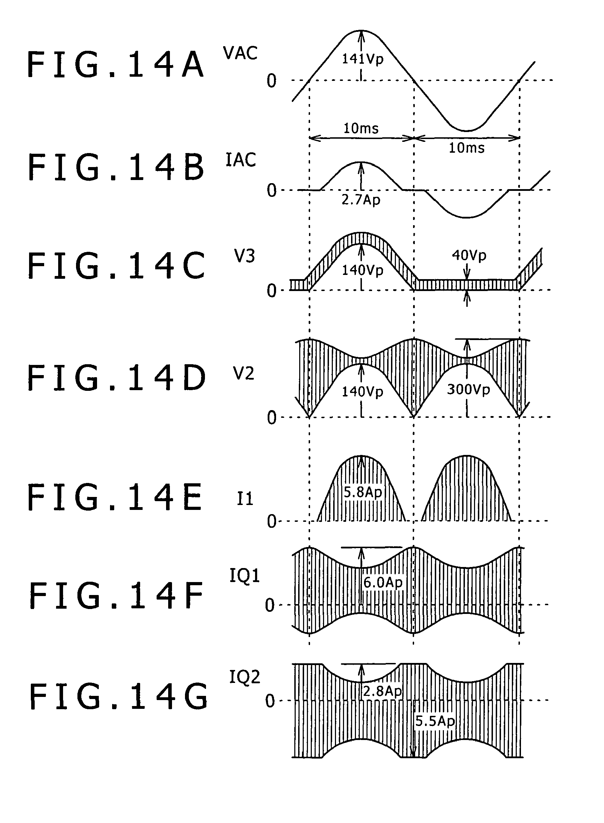

Figs. 14A to 14G show the operation waveforms of major parts in the power factor correction circuit as waveforms based on the AC supply voltage cycle, when the AC input voltage is 100 V and the load power is the maximum power of 150 W. Fig. 14A shows the AC input voltage VAC. Fig. 14B shows an AC input current IAC. Fig. 14C shows a ripple voltage V3 arising from rectification by the primary-side rectifier element Di. Fig. 14D shows the primary-side resonant voltage V2. Fig. 14E shows the primary-side resonant current I1. Fig. 14F shows the current IQ1 that flows through the switching element Q1 or the body diode DD1. Fig. 14G shows the current IQ2 that flows through the active clamp circuit. The respective hatched areas of the resonant voltage V2, the primary-side resonant current I1, the current IQ1, and the current IQ2 of Fig. 14 indicate that these voltages and currents are switched at the same cycle as that of the switching waveform of the switching element Q1.

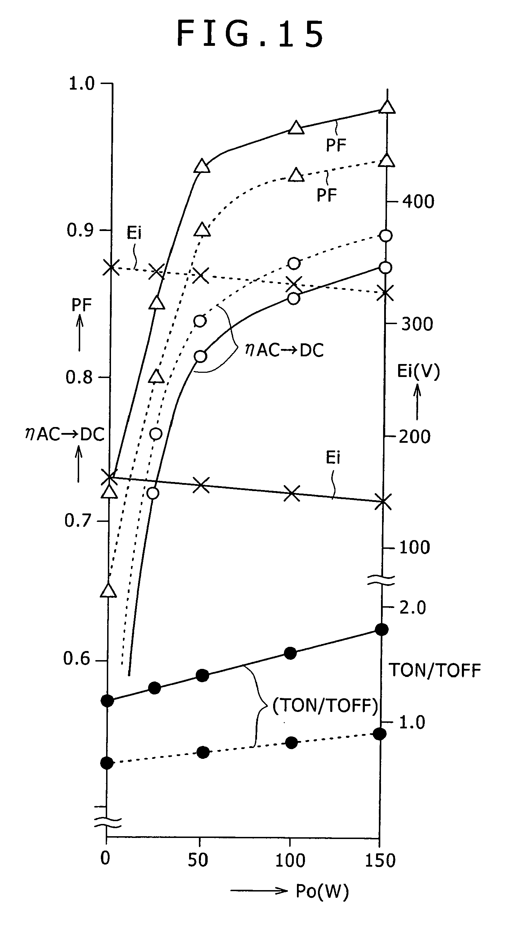

Fig. 15 shows the DC input voltage Ei, the power factor PF, the power conversion efficiency ηAC →DC from AC input power to DC output power, and the ratio TON/TOFF between the on-period TON and the off-period TOFF of the switching element Q1, as functions of the load power Po in the range of 0 W (no load) to 150 W, under the input voltage condition of the AC input voltage VAC of 100 V and 230 V, respectively. In Fig. 15, the full lines indicate the functions when the AC input voltage VAC is 100 V, while the dashed lines indicate the functions when it is 230 V.

Examples of the representative characteristics that can be read from Fig. 15 are as follows. Specifically, when the AC input voltage VAC is 100 V and the load power Po is 150 W, the power factor PF is as high as 0.985. When the AC input voltage VAC is 230 V and the load power Po is 150 W, the power factor PF is as high as 0.95.

Furthermore, even if the AC input voltage is widely changed, high values of the power conversion efficiency ηAC → DC are obtained. Specifically, when the AC input voltage VAC is 100 V and the load power Po is 150 W, the power conversion efficiency ηAC → DC is 88.5%. When the AC input voltage VAC is 230 V and the load power Po is 150 W, the power conversion efficiency ηAC → DC is 90.6%. This indicates that a wide range compatible configuration can be achieved in terms of the breakdown voltage of the switching element Q1.

Even when the load power Po is 25 W, the power factor PF is 0.80 when the AC input voltage VAC is 100 V.

As the load power Po decreases, the variation value ΔEi of the DC input voltage Ei decreases because the on-period and off-period of the switching element Q1 are shortened. When the AC input voltage VAC is 100 V, the variation range of the DC input voltage Ei from 139 V to 163 V is obtained in association with variation of the load power Po from 150 W to 0 W. Thus, the variation value ΔEi is 24 V. Furthermore, when the AC input voltage VAC is 230 V, the variation range of the DC input voltage Ei from 327 V to 359 V is obtained in association with variation of the load power Po from 150 W to 0 W. Thus, the variation value ΔEi is 32 V.

The switching power supply circuit of the fifth embodiment achieves enhanced power conversion efficiency ηAC → DC compared with the switching power supply circuit shown in Fig. 24 as a background art. Furthermore, because the switching power supply circuit of the fifth embodiment does not need to include an active filter, the circuit is allowed to include a reduced number of circuit components. Specifically, as is apparent from the description with reference to Fig. 24, the active filter is formed of a large number of components typified by the switching element Q103, the power-factor/output-voltage control IC 120 for driving the switching element Q103, and so on. In contrast, it is sufficient, for power factor correction, for the switching power supply circuit of the fifth embodiment to employ high-speed diodes for the primary-side rectifier element Di and include the active clamp circuit. Therefore, the number of components is greatly smaller compared with that of the circuit including the active filter. Thus, the circuit of the fifth embodiment can be achieved as a power supply circuit having a function of power factor correction at far lower costs compared with the circuit shown in Fig. 24. In addition, the great decrease in the number of components allows an effective reduction in the size and weight of the circuit board.

### (Sixth Embodiment)

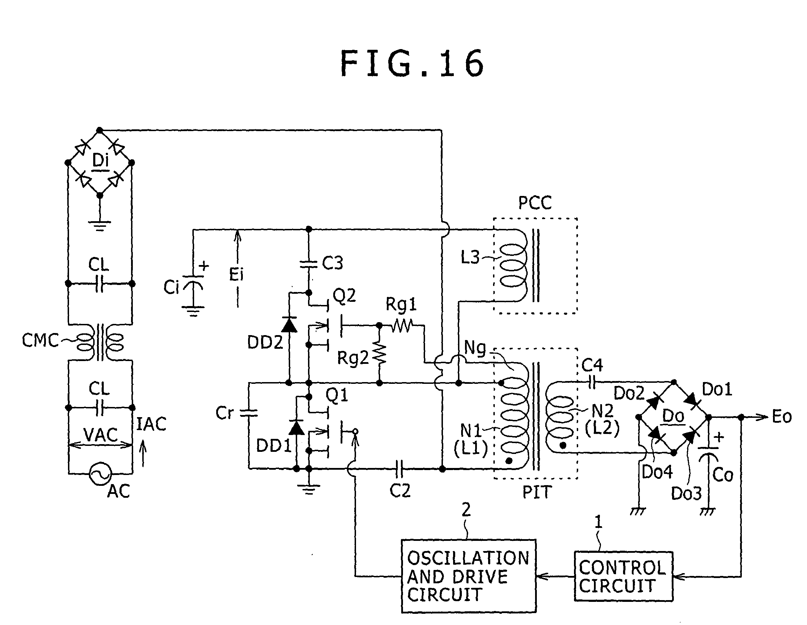

Fig. 16 shows a switching power supply circuit according to a sixth embodiment of the invention. Most part of the sixth embodiment employs the same configuration as that of the fourth embodiment. The same parts in the sixth embodiment as those in the fourth embodiment are given the same symbols in Fig. 16, and a description therefor is omitted. The sixth embodiment is different from the fourth embodiment, in that the sixth embodiment can achieve an effect of power factor correction without including a power factor correction first diode D1 and a filter capacitor CN connected between one end of the first diode D1 and one end of a smoothing capacitor Ci. Due to the absence of the first diode D1 and the filter capacitor CN, a high-frequency current flows through a primary-side rectifier element Di. To address this, the primary-side rectifier element Di is formed of high-speed diodes having favorable high-frequency characteristics.

Specifically, the configuration employed in the sixth embodiment is a switching power supply circuit including a rectifying and smoothing part that converts input AC power from an alternating-current power supply AC into DC power, a converter part that converts the DC power into AC power and further converts the AC power into DC power, and a power factor correction part that improves the power factor. The rectifying and smoothing part includes the smoothing capacitor Ci and the primary-side rectifier element Di that is supplied with input AC power from the AC power supply and rectifies the input power. The primary-side rectifier element Di is formed of high-speed diodes, and operates also as a part of the power factor correction part to be described later.

The converter part includes a choke coil PCC of which one end is connected to one end of the smoothing capacitor Ci, a converter transformer PIT in which a primary winding N1 and a secondary winding N2 are wound around the core so that the windings N1 and N2 are loosely coupled to each other. One end of the primary winding N1 is connected to the other end of the choke coil PCC. The converter part includes also a switching element Q1 of which one end is connected to the one end of the primary winding N1, a primary-side series resonant circuit, and a primary-side parallel resonant circuit. The resonant frequency of the primary-side series resonant circuit is dominated by a leakage inductance L1 arising in the primary winding N1, an inductance L3 of the choke coil PCC, and the capacitance of a primary-side series resonant capacitor C2 of which one end is connected to the other end of the primary winding N1. The resonant frequency of the primary-side parallel resonant circuit is dominated by the leakage inductance L1, the inductance L3, and the capacitance of a primary-side parallel resonant capacitor Cr connected in parallel to the switching element Q1. The converter part further includes an oscillation and drive circuit 2 that turns on and off the switching element Q1, and a control circuit 1 that supplies such a control signal to the oscillation and drive circuit 2 that a secondary-side DC output voltage Eo is set to a predetermined value. The voltage Eo is output from a secondary-side rectifier circuit that is formed of a secondary-side series resonant capacitor C4 connected to the secondary winding N2, a secondary-side rectifier element Do, and a smoothing capacitor Co.

The power factor correction part includes an active clamp circuit and across-line capacitors CL connected to the input side of the primary-side rectifier element Di. The active clamp circuit is connected in parallel to the choke coil PCC and has a series circuit of a voltage clamp capacitor C3 and an auxiliary switching element Q2 that is turned on in a complementary manner with the switching element Q1. The primary-side rectifier element Di is formed of high-speed diodes that are rectifier elements of which switching speed is sufficiently high for both the resonant frequency of the primary-side series resonant circuit and that of the primary-side parallel resonant circuit.

The switching power supply circuit of the sixth embodiment does not include a power factor correction inductor Lo for the purpose of simplification of the circuit, because the leakage inductance L1 arising in the primary winding N1 serves as a boost inductor. In addition, a power factor correction second diode D2 is also omitted for further simplification of the circuit. Even with such a configuration, the power factor correction part shares the switching element Q1 and serves as a boost converter that outputs the sum of a DC input voltage Ei and the voltage arising across the voltage clamp capacitor C3, to thereby be capable of functioning to improve the power factor. Also in this configuration, the auxiliary switch operates as a rectifier element of the boost converter similarly to the first and second embodiments.

Furthermore, also in this configuration, the active clamp circuit has a function to clamp the voltage that arises when the switching element Q1 is in the off-state, and thus allows the breakdown voltage of the switching element Q1 to be lower.

In the switching power supply circuit of the sixth embodiment, a power factor correction first diode D1 is also absent. However, because the primary-side rectifier element Di is formed of high-speed diodes that are rectifier elements of which switching speed is sufficiently high for both the resonant frequency of the primary-side series resonant circuit and that of the primary-side parallel resonant circuit, the primary-side rectifier element Di operates similarly to the first diode D1 to thereby improve the power factor. Furthermore, instead of the filter capacitor CN, the across-line capacitors CL connected to the input side of the primary-side rectifier element Di serve as a filter for the resonant frequencies of the primary-side series resonant circuit and primary-side parallel resonant circuit, to thereby prevent leakage of a high-frequency wave into the alternating-current power supply AC.

Operation and effect of major parts in the sixth embodiment are the same as those of major parts in the fifth embodiment, and hence a description therefor is omitted.

### (Modifications of Secondary-Side Circuit)

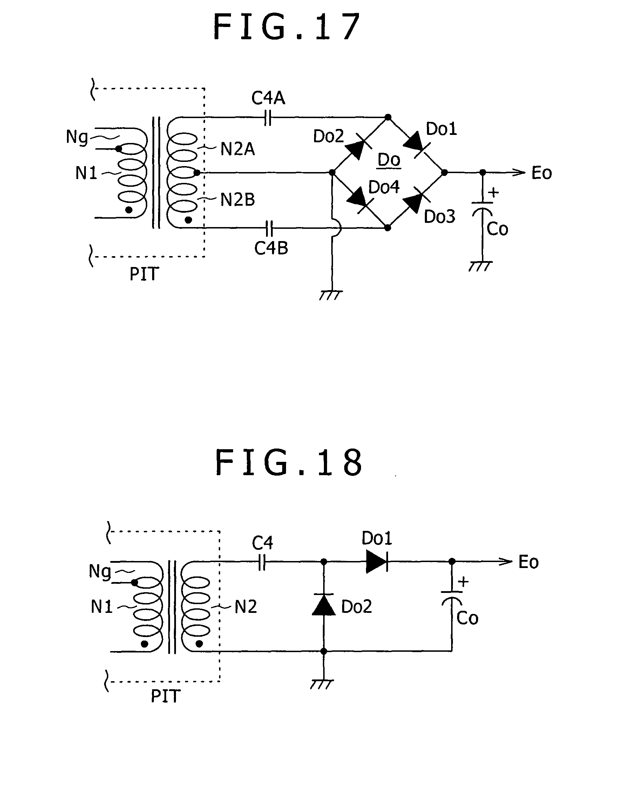

Modifications of the secondary-side circuit substitutable for the circuits in the first to sixth embodiments will be described below with reference to Figs. 17 to 19.

The secondary-side rectifier circuit shown in Fig. 17 serves as a voltage-doubler full-wave rectifier circuit. Specifically, the secondary winding is provided with a center tap to thereby be divided into a secondary winding portion N2A and a secondary winding portion N2B on both the sides of the center tap as the boundary. The secondary winding portions N2A and N2B have the same number of turns. The center tap of the secondary winding N2 is connected to the secondary-side ground. One end of the secondary winding N2, included in the secondary winding portion N2A, is connected in series to a secondary-side series resonant capacitor C4A. The other end of the secondary winding N2, included in the secondary winding portion N2B, is connected in series to a secondary-side series resonant capacitor C4B having the same capacitance as that of the capacitor C4A. Thus, first and second secondary-side series resonant circuits are formed. The first resonant circuit is formed of the leakage inductance component of the secondary winding portion N2A and the capacitance of the secondary-side series resonant capacitor C4A. The second resonant circuit is formed of the leakage inductance component of the secondary winding portion N2B and the capacitance of the secondary-side series resonant capacitor C4B, and has substantially the same resonant frequency as that of the first resonant circuit.

The one end of the secondary winding N2 in the secondary winding portion N2A is coupled via the secondary-side series resonant capacitor C4A to the connecting node between the anode of a rectifier diode Do1 and the cathode of a rectifier diode Do2. Furthermore, the other end of the secondary winding N2 in the secondary winding portion N2B is coupled via the secondary-side series resonant capacitor C4B to the connecting node between the anode of a rectifier diode Do3 and the cathode of a rectifier diode Do4. The cathodes of the rectifier diodes Do1 and Do3 are connected to the positive terminal of a smoothing capacitor Co. The negative terminal of the smoothing capacitor Co is connected to the secondary-side ground. The connecting node between the anodes of the rectifier diodes Do2 and Do4 is also connected to the secondary-side ground.

In this manner, first and second voltage-doubler half-wave rectifier circuits are formed. The first rectifier circuit includes the first secondary-side series resonant circuit and is formed of the secondary winding portion N2A, the secondary-side series resonant capacitor C4A, the rectifier diode Do1, the rectifier diode Do2, and the smoothing capacitor Co. The second rectifier circuit includes the second secondary-side series resonant circuit and is formed of the secondary winding portion N2B, the secondary-side series resonant capacitor C4B, the rectifier diode Do1, the rectifier diode Do2, and the smoothing capacitor Co. Thus, in the periods of the half cycles of one polarity of an alternating voltage of the secondary winding N2, charging of the smoothing capacitor Co with the rectified current is carried out by the voltage arising from superposition of the voltage induced in the secondary winding portion N2B and the voltage across the secondary-side series resonant capacitor C4B. In addition, in the periods of the half cycles of the other polarity, charging of the smoothing capacitor Co with the rectified current is carried out by the voltage arising from superposition of the voltage induced in the secondary winding portion N2A and the voltage across the secondary-side series resonant capacitor C4A. Accordingly, a secondary-side DC output voltage Eo, which is the voltage across the smoothing capacitor Co, has the level equal to twice that of the voltage induced in the secondary winding portions N2A and N2B. That is, a voltage-doubler full-wave rectifier circuit is achieved.

The secondary-side rectifier circuit shown in Fig. 18 serves as a voltage-doubler half-wave rectifier circuit. Specifically, a secondary-side series resonant circuit formed of the leakage inductance component of a secondary winding N2 and the capacitance of a secondary-side series resonant capacitor C4 is formed. The voltage of one polarity arising in the secondary winding N2 charges the secondary-side series resonant capacitor C4 via a rectifier diode Do2, while the voltage of the other polarity charges a smoothing capacitor Co via a rectifier diode Do1. As a result, a secondary-side DC output voltage Eo having the level equal to twice that of the voltage induced in the secondary winding N2 is obtained because the voltage across the secondary-side series resonant capacitor C4 is added to the voltage across the smoothing capacitor Co. That is, a voltage-doubler full-wave rectifier circuit is achieved.

The secondary-side rectifier circuit shown in Fig. 19 is a center-tap double-wave rectifier circuit including a rectifier diode Do1, a rectifier diode Do2, and a partial voltage resonant circuit that is formed of a partial voltage resonant capacitor C5 and the leakage inductance components of a secondary winding portion N2A and a secondary winding portion N2B.

Specific design examples of the power supply circuit of the above-described embodiments are based on the premise that a commercial AC supply voltage of 100 V is input as the AC input voltage VAC. However, there is no particular limitation on the value of the AC input voltage VAC in embodiments of the present invention. For example, also when a power supply circuit is designed to address a commercial AC supply voltage input of 200 V, employing the configuration based on the present invention can offer the same advantages. Furthermore, for example, other configurations are also available as the circuit configuration of details of the primary-side voltage resonant converter, and the configuration of the secondary-side rectifier circuit including a secondary-side series resonant circuit. In addition, as the switching element, e.g. an insulated gate bipolar transistor (IGBT), bipolar transistor, or another element may be used instead of a MOS-FET. Moreover, although the above-described embodiments employ a separately-excited switching converter, the present invention can be applied also to a configuration employing a self-excited switching converter.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A switching power supply circuit comprising:
a rectifying and smoothing part configured to convert input alternating-current, AC power from an AC power supply into direct-current, DC power;
a converter part configured to convert the DC power from the rectifying and smoothing part into AC power, and further convert the AC power into DC power; and
a power factor correction part configured to improve a power factor, wherein
the rectifying and smoothing part includes a primary-side rectifier element that is supplied with the input AC power from the AC power supply and rectifies the input power, and a smoothing capacitor,
the converter part includes
a choke coil of which one end is connected to one end of the smoothing capacitor,
a converter transformer in which a primary winding and a secondary winding are wound around a core so that the primary winding and the secondary winding are loosely coupled to each other, one end of the primary winding being connected to the other end of the choke coil,
a switching element of which one end is connected to the other end of the primary winding,
a primary-side series resonant circuit of which resonant frequency is dominated by a leakage inductance arising in the primary winding, an inductance of the choke coil, and a capacitance of a primary-side series resonant capacitor of which one end is connected to the one end of the primary winding,
a primary-side parallel resonant circuit of which resonant frequency is dominated by the leakage inductance arising in the primary winding, the inductance of the choke coil, and a capacitance of a primary-side parallel resonant capacitor connected in parallel to the switching element,
an oscillation and drive circuit that turns on and off the switching element, and
a control circuit that supplies such a control signal to the oscillation and drive circuit that a secondary-side DC output voltage is set to a predetermined value, the secondary-side DC output voltage being output from a secondary-side rectifier circuit connected to the secondary winding, and
the power factor correction part includes
an active clamp circuit that is connected between the one end of the switching element and the one end of the choke coil, and includes a series circuit of a voltage clamp capacitor and an auxiliary switching element that is turned on in a complementary manner with the switching element,
a power factor correction first diode of which one end is connected to one end of an output side of the primary-side rectifier element, and
a filter capacitor that is connected between the one end of the power factor correction first diode and the one end of the smoothing capacitor.

2. A switching power supply circuit comprising:
a rectifying and smoothing part configured to convert input alternating-current, AC power from an AC power supply into direct-current, DC power;
a converter part configured to convert the DC power from the rectifying and smoothing part into AC power, and further convert the AC power into DC power; and
a power factor correction part configured to improve a power factor, wherein
the rectifying and smoothing part includes a primary-side rectifier element that is supplied with the input AC power from the AC power supply and rectifies the input power, and a smoothing capacitor,
the converter part includes a choke coil of which one end is connected to one end of the smoothing capacitor,
a converter transformer in which a primary winding and a secondary winding are wound around the core so that the primary winding and the secondary winding are loosely coupled to each other, one end of the primary winding being connected to the other end of the choke coil,
a switching element of which one end is connected to the one end of the primary winding,
a primary-side series resonant circuit of which resonant frequency is dominated by a leakage inductance arising in the primary winding, an inductance of the choke coil, and a capacitance of a primary-side series resonant capacitor of which one end is connected to the other end of the primary winding,
a primary-side parallel resonant circuit of which resonant frequency is dominated by the leakage inductance arising in the primary winding, the inductance of the choke coil, and a capacitance of a primary-side parallel resonant capacitor connected in parallel to the switching element,
an oscillation and drive circuit that turns on and off the switching element, and
a control circuit that supplies such a control signal to the oscillation and drive circuit that a secondary-side DC output voltage is set to a predetermined value, the secondary-side DC output voltage being output from a secondary-side rectifier circuit connected to the secondary winding, and
the power factor correction part includes
an active clamp circuit that is connected in parallel to the choke coil, and includes a series circuit of a voltage clamp capacitor and an auxiliary switching element that is turned on in a complementary manner with the switching element,
a power factor correction first diode of which one end is connected to one end of an output side of the primary-side rectifier element, and
a filter capacitor that is connected between the one end of the power factor correction first diode and the one end of the smoothing capacitor.

3. A switching power supply circuit comprising:
a rectifying and smoothing part configured to convert input alternating-current, AC power from an AC power supply into direct-current, DC power;
a converter part configured to convert the DC power from the rectifying and smoothing part into AC power, and further convert the AC power into DC power; and
a power factor correction part configured to improve a power factor, wherein
the rectifying and smoothing part includes a primary-side rectifier element that is supplied with the input AC power from the AC power supply and rectifies the input power, and a smoothing capacitor,
the converter part includes
a choke coil of which one end is connected to one end of the smoothing capacitor,
a converter transformer in which a primary winding and a secondary winding are wound around the core so that the primary winding and the secondary winding are loosely coupled to each other, one end of the primary winding being connected to the other end of the choke coil,
a switching element of which one end is connected to the other end of the primary winding,
a primary-side series resonant circuit of which resonant frequency is dominated by a leakage inductance arising in the primary winding, an inductance of the choke coil, and a capacitance of a primary-side series resonant capacitor of which one end is connected to the one end of the primary winding,
a primary-side parallel resonant circuit of which resonant frequency is dominated by the leakage inductance arising in the primary winding, the inductance of the choke coil, and a capacitance of a primary-side parallel resonant capacitor connected in parallel to the switching element,
an oscillation and drive circuit that turns on and off the switching element, and
a control circuit that supplies such a control signal to the oscillation and drive circuit that a secondary-side DC output voltage is set to a predetermined value, the secondary-side DC output voltage being output from a secondary-side rectifier circuit connected to the secondary winding,
the power factor correction part includes
an active clamp circuit that is connected between the one end of the switching element and the one end of the choke coil, and includes a series circuit of a voltage clamp capacitor and an auxiliary switching element that is turned on in a complementary manner with the switching element, and
a filter capacitor that is connected to an input side of the primary-side rectifier element, and
the primary-side rectifier element is formed of a rectifier element of which switching speed is sufficiently high for both the resonant frequency of the primary-side series resonant circuit and the resonant frequency of the primary-side parallel resonant circuit.

4. A switching power supply circuit comprising:
a rectifying and smoothing part configured to convert input alternating-current, AC power from an AC power supply into direct-current, DC power;
a converter part configured to convert the DC power from the rectifying and smoothing part into AC power, and further convert the AC power into DC power; and
a power factor correction part configured to improve a power factor, wherein
the rectifying and smoothing part includes a primary-side rectifier element that is supplied with the input AC power from the AC power supply and rectifies the input power, and a smoothing capacitor,
the converter part includes
a choke coil of which one end is connected to one end of the smoothing capacitor,
a converter transformer in which a primary winding and a secondary winding are wound around the core so that the primary winding and the secondary winding are loosely coupled to each other, one end of the primary winding being connected to the other end of the choke coil,
a switching element of which one end is connected to the one end of the primary winding,
a primary-side series resonant circuit of which resonant frequency is dominated by a leakage inductance arising in the primary winding, an inductance of the choke coil, and a capacitance of a primary-side series resonant capacitor of which one end is connected to the other end of the primary winding,
a primary-side parallel resonant circuit of which resonant frequency is dominated by the leakage inductance arising in the primary winding, the inductance of the choke coil, and a capacitance of a primary-side parallel resonant capacitor connected in parallel to the switching element,
an oscillation and drive circuit that turns on and off the switching element, and
a control circuit that supplies such a control signal to the oscillation and drive circuit that a secondary-side DC output voltage is set to a predetermined value, the secondary-side DC output voltage being output from a secondary-side rectifier circuit connected to the secondary winding,
the power factor correction part includes
an active clamp circuit that is connected in parallel to the choke coil, and includes a series circuit of a voltage clamp capacitor and an auxiliary switching element that is turned on in a complementary manner with the switching element, and
a filter capacitor that is connected to an input side of the primary-side rectifier element, and
the primary-side rectifier element is formed of a rectifier element of which switching speed is sufficiently high for both the resonant frequency of the primary-side series resonant circuit and the resonant frequency of the primary-side parallel resonant circuit.

5. The switching power supply circuit according to claim 1 or claim 2, wherein
the power factor correction part further includes:
a power factor correction second diode that is connected between the other end of the power factor correction first diode and a connecting node between the voltage clamp capacitor and the auxiliary switching element, and shunts a current from the power factor correction first diode; and
a power factor correction inductor that is connected between the other end of the power factor correction first diode and the other end of the converter transformer, and shunts the current from the power factor correction first diode.

6. The switching power supply circuit according to one of claim 1 to claim 4, wherein
the secondary-side rectifier circuit connected to the secondary winding of the converter transformer includes a secondary-side series resonant capacitor, and a secondary-side series resonant circuit is formed by a leakage inductance arising in the secondary winding and the secondary-side series resonant capacitor.

7. The switching power supply circuit according to one of claim 1 to claim 4, wherein
the secondary-side rectifier circuit connected to the secondary winding of the converter transformer includes a partial voltage resonant capacitor so that a secondary-side partial voltage resonant circuit is formed.
